(19) Europäisches Patentamt
European Patent Office
Office européen des brevets

(11) **EP 4 708 080 A1**

(12) **EUROPEAN PATENT APPLICATION**

(43) Date of publication:
**11.03.2026** Bulletin 2026/11

(21) Application number: **24306456.5**

(22) Date of filing: **05.09.2024**

(51) International Patent Classification (IPC):
*G06F 16/61* *(2019.01)* *G06F 16/683* *(2019.01)*

(52) Cooperative Patent Classification (CPC):
**G06F 16/683; G06F 16/61**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **DEEZER S.A.**
**75009 Paris (FR)**

(72) Inventor: **MARTIN, Benjamin**
**75009 Paris (FR)**

(74) Representative: **BCF Global**
**17-21, rue Saint-Fiacre**
**75002 Paris (FR)**

(54) **METHODS, DEVICES, PROCESSORS AND SYSTEMS FOR AUDIO FINGERPRINTING AND RETRIEVAL**

(57) Methods, processors, systems for audio fingerprinting and retrieval are disclosed. One method includes receiving the audio segment generating a first set of peaks by applying a first sliding window on the audio segment, generating a second set of peaks by applying a second sliding window on the audio segment, generating a combined set of peaks based on the first and second sets of peaks, and generating the fingerprint for the audio segment using the combined set of peaks. Another method includes accessing a first inverted index using the sequence of query hashes, determining a temporally compatible sub-sequence of query hashes in the sequence using data retrieved from the first inverted index, accessing a second inverted index using only the temporally compatible sub-sequence, and retrieving data indicative of the target stored audio segment. Another method for target stored digital items is also disclosed.

**FIG. 1**

EP 4 708 080 A1

## Description

## FIELD

The present technology relates to audio fingerprinting in general, and specifically to methods, devices, processors and systems for audio fingerprinting and retrieval.

## BACKGROUND

Audio fingerprinting is a technology used for identifying, cataloging, and retrieving audio content. It has applications in various fields such as music recognition, copyright management, broadcast monitoring, and digital content retrieval. Broadly, audio fingerprinting techniques rely on creating a unique identifier, or "fingerprint", for an audio segment, which can then be used to match and identify matching stored audio content.

The audio fingerprinting process usually involves several steps. Broadly, feature extraction is performed, where the audio signal is processed to extract features that are indicative of the content. The extracted features are then used to generate a compact representation that is then saved in a database, along with information about the audio content.

Indexing structures can be used to facilitate retrieval operations executed on the database. For example, when a query audio segment is acquired, a compact representation thereof is generated using a similar process, as explained above, and is then compared against the database to find possible matches. Various similarity metrics can be employed to identify most similar matches.

US Patent 11,182,426 discloses audio retrieval and identification methods and devices. A spectrogram is used to generate a fingerprint of an audio sample, and the fingerprint is used to recognized an audio track. Conventional audio fingerprinting techniques provide means for identifying and retrieving audio content using feature extraction, fingerprint generation, and matching algorithms. However, ongoing research and development is needed to overcome several technical challenges related to efficiency and/or performance of conventional audio fingerprinting techniques and/or retrieval operations.

## SUMMARY

It is an object of the present technology to ameliorate at least some of the inconveniences present in the prior art. Embodiments of the present technology may provide and/or broaden the scope of approaches to and/or methods of achieving the aims and objects of the present technology.

In some non-limiting embodiments of the present technology, developers have devised methods, devices, processors and/or systems using audio fingerprinting techniques for music recognition applications. For example, audio fingerprinting techniques disclosed herein may be used to identify songs and/or musical pieces from relatively short audio samples.

In other non-limiting embodiments of the present technology, developers have devised methods, devices, processors and/or systems using audio fingerprinting techniques for broadcast monitoring applications. For example, audio fingerprinting techniques disclosed herein may be used to track and verify the broadcast of audio content, including advertisements and songs, across various media channels.

In additional non-limiting embodiments of the present technology, developers have devised methods, devices, processors and/or systems using audio fingerprinting techniques for copyright management applications. For example, audio fingerprinting techniques disclosed herein may be used to detect unauthorized use and/or distribution of copyrighted audio content.

In further non-limiting embodiments of the present technology, developers have devised methods, devices, processors and/or systems using audio fingerprinting techniques for digital content retrieval applications. For example, audio fingerprinting techniques disclosed herein may be used to search and retrieve audio content from large databases, such as music libraries and/or audio archives.

In yet other non-limiting embodiments of the present technology, developers have devised methods, devices, processors and/or systems using audio fingerprinting techniques for digital content retrieval applications other than audio retrieval applications. For example, one or more techniques disclosed herein may be used to search and retrieve content from large database storing content that is not necessarily audio content, such as is the case with search engines with one or more verticals (e.g., text, image, video verticals), for example.

Developers of the present technology have realized that accuracy of conventional audio fingerprint techniques is another significant challenge, since audio segments may be noisy, distorted and/or similar which is detrimental to the uniqueness of a given fingerprint.

Developers of the present technology have realized that scalability of conventional audio fingerprint techniques is a significant technical challenge, since handling very large databases with millions of audio tracks can be computationally intensive and requires efficient indexing and search algorithms. Developers of the present technology have also realized that executing comparatively more efficient retrieval operations may be beneficial in a variety of applications, such as search engines, for example.

In a first broad aspect of the present technology, there is provided a method of generating a fingerprint for an audio segment, comprising: receiving the audio segment; generating a first set of peaks by applying a first sliding window on the audio segment; generating a second set of peaks by applying a second sliding window on the audio segment, window instances of the second sliding window being offset from window instances of the first sliding window; generating a combined set of peaks based on the first and second sets of peaks, the combined set of peaks including peaks common to the first and second sets of peaks; and generating the fingerprint for the audio segment using the combined set of peaks.

In some embodiments of the method, the method further comprises retrieving a stored audio segment from an index using the fingerprint, the stored audio segment matching the audio segment.

In some embodiments of the method, the retrieving comprises generating a hash using the fingerprint and accessing the index using the hash to retrieve the stored audio segment.

In some embodiments of the method, the combined set of peaks excludes at least one peak from at least one of the first and the second set of peaks.

In some embodiments of the method, the method further comprises generating a group of peaks based on the combined set of peaks, and wherein the generating the fingerprint comprises extracting features from the group of peaks and generating the fingerprint using the extracted features.

In some embodiments of the method, the extracted features comprise frequency-based features amongst peaks in the group of peaks.

In some embodiments of the method, the extracted features comprise time-based features amongst peaks in the group of peaks.

In some embodiments of the method, the method further comprises generating a third set of peaks by applying a third sliding window on the audio segment, the window instances of the second sliding window and the first sliding window being offset from window instances of the third sliding window, and wherein the generating the combined set of peaks is further based on the third set of peaks.

In some embodiments of the method, the generating the first set of peaks comprises generating a first time-frequency representation of the audio segment, and the generating the second set of peaks comprises generating a second time-frequency representation of the audio segment.

In some embodiments of the method, the first time-frequency representation of the audio segment is a first spectrogram generating based on the audio segment, and wherein the second time-frequency representation of the audio segment is a second spectrogram generating based on the audio segment.

In some embodiments of the method, the generating the first set of peaks comprises executing a first Constant-Q Transform (CQT) routine onto the audio segment, and wherein the generating the second set of peaks comprises executing a second CQT routine onto the audio segment.

In some embodiments of the method, the generating the first set of peaks comprises executing a CQT routine onto the audio segment, and wherein the generating the second set of peaks comprises executing a Discrete Fourier Transform (DFT) routine onto the audio segment.

In some embodiments of the method, the peaks common to the first and second sets of peaks comprises peaks that are within a pre-determined threshold distance from each other.

In some aspects of the present technology, there is provided a processor being configured to execute the method of generating a fingerprint for an audio segment.

In some aspects of the present technology, there is provide a computer readable medium configured to store instructions, which when executed by a processor, causes the processor to execute the method of generating a fingerprint for an audio segment.

In a second broad aspect of the present technology, there is provided a method of retrieving a target stored audio segment, comprising: receiving a query audio segment; generating a sequence of query hashes using the query audio segment, query hashes in the sequence of query hashes being associated with respective temporal positions from the query audio segment; accessing a first inverted index using the sequence of query hashes; determining a temporally compatible subsequence of query hashes in the sequence using data retrieved from the first inverted index, the temporally compatible sub-sequence including query hashes associated with a temporal sequence that matches a temporal sequence of same hashes from at least one stored audio segment; accessing a second inverted index using only the temporally compatible sub-sequence; determining the target stored audio segment based on data retrieved from the second inverted index; and transmitting data indicative of the target stored audio segment as a retrieval response to the query audio segment.

In some embodiments of the method, the determining the temporally compatible sub-sequence comprises: generating a digital matrix based on the sequence and the data retrieved from the first inverted index, the data retrieved from the first inverted index including a first posting list associated with a corresponding query hash from the sequence, the first posting list being indicative of whether the corresponding query hash is present at a given temporal position in at least one stored audio segment; determining a diagonal value for a given diagonal in the digital matrix; and determining the temporally compatible sub-sequence using the given diagonal.

In some embodiments of the method, the accessing the second inverted index comprises: using hash-position pairs from the temporally compatible sub-sequence as index keys for identifying a second posting list, the second posting list being indicative of candidate stored audio segments.

In some embodiments of the method, the determining the target stored audio segment comprises:

generating occurrence counts for the candidate stored audio segments; and determining the target stored audio segment based on the occurrence counts.

In some embodiments of the method, wherein the generating the sequence comprises: determining amplitude peaks for the given audio segment; determining a sequence of groups of peaks using the amplitude peaks; and generating, using a hashing function, the sequence based on the sequence of groups of peaks.

In some embodiments of the method, the method further comprises periodically updating the first inverted index.

In some embodiments of the method, the digital matrix is generated for the query audio segment.

In some embodiments of the method further comprises periodically updating the second inverted index.

In some aspects of the present technology, there is provided a processor being configured to execute the method of retrieving the target stored audio segment.

In some aspects of the present technology, there is provided a computer readable medium configured to store instructions, which when executed by a processor, causes the processor to execute the method of retrieving the target stored audio segment.

In a third broad aspect of the present technology, there is provided a method of retrieving a target stored digital item, comprising: receiving a query digital item; generating a sequence of query elements using the query digital item, query elements in the sequence of query elements being associated with respective positions from the query digital item; accessing a first inverted index using the sequence of query elements; determining a sequentially compatible sub-sequence of query elements in the sequence using data retrieved from the first inverted index, the sequentially compatible sub-sequence including query elements associated with a positional sequence that matches a positional sequence of same elements from at least one stored digital item; accessing a second inverted index using only the sequentially compatible sub-sequence; determining the target stored digital item based on data retrieved from the second inverted index; and transmitting data indicative of the target stored digital item as a retrieval response to the query digital item.

In some embodiments of the method, the determining the sequentially compatible sub-sequence comprises: generating a digital matrix based on the sequence and the data retrieved from the first inverted index, the data retrieved from the first inverted index including a first posting list associated with a corresponding query element from the sequence, the first posting list being indicative of whether the corresponding query element is present at a given position in at least one stored digital item; determining a diagonal value for a given diagonal in the digital matrix; and determining the temporally compatible sub-sequence using the given diagonal.

In some embodiments of the method, the accessing the second inverted index comprises: using element-position pairs from the sequentially compatible sub-sequence as index keys for identifying a second posting list, the second posting list being indicative of candidate stored digital items.

In some embodiments of the method, the determining the target stored digital item comprises: generating occurrence counts for the candidate stored digital items; and determining the target stored digital item based on the occurrence counts.

In some embodiments of the method, the method further comprises periodically updating the first inverted index.

In some embodiments of the method, the digital matrix is generated for the query digital item.

In some embodiments of the method, the method further comprises periodically updating the second inverted index.

In some aspects of the present technology, there is provided a processor being configured to execute the method of retrieving the target stored digital item.

In some aspects of the present technology, there is provided a computer readable medium configured to store instructions, which when executed by a processor, causes the processor to execute the method of retrieving the target stored digital item.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

For a better understanding of the present technology, as well as other aspects and further features thereof, reference is made to the following description which is to be used in conjunction with the accompanying drawings, where:

FIG. 1 is a schematic representation of a computer system, in accordance with at least some non-limiting embodiments of the present technology.

FIG. 2 is a schematic representation of a networked system, in accordance with at least some non-limiting embodiments of the present technology.

FIG. 3 is a schematic representation of a processing pipeline executable by a platform server of FIG. 2, in accordance with at least some non-limiting embodiments of the present technology.

FIG. 4 is an illustration of an audio segment acquired by the platform server, in accordance with at least some embodiments of the present technology, in accordance with at least some non-limiting embodiments of the present technology.

FIG. 5 is an illustration of a first time-frequency representation generated by the platform server using a first window algorithm the audio segment of FIG. 4, in accordance with at least some non-limiting embodiments of the present technology.

FIG. 6 is an illustration of a second time-frequency representation generated by the platform server using a second window algorithm the audio segment of FIG. 4, in accordance with at least some non-limiting embodiments of the present technology.

FIG. 7 is an illustration of a combined time-frequency representation generated by the platform server using the first and the second time-frequency representations of FIGS. 5 and 6, in accordance with at least some non-limiting embodiments of the present technology.

FIG. 8 is an illustration of a plurality of peaks groups determined by the platform server using a plurality of amplitude peaks, in accordance with at least some non-limiting embodiments of the present technology.

FIG. 9 is an illustration of a plurality of features extracted by the platform server for respective ones from the plurality of groups of peaks of FIG. 8, in accordance with at least some non-limiting embodiments of the present technology.

FIG. 10 is an illustration of a plurality of hashes generated by a hashing function based on a fingerprint, in accordance with at least some non-limiting embodiments of the present technology.

FIG. 11 is an illustration of an index system used for generating retrieval results, in accordance with at least some non-limiting embodiments of the present technology.

FIG. 12 is an illustration of a conventional inverted index.

FIG. 13 is an illustration of a conventional retrieval routine.

FIG. 14 is an illustration of a first inverted index, in accordance with at least some non-limiting embodiments of the present technology.

FIG. 15 is an illustration of a second inverted index, in accordance with at least some non-limiting embodiments of the present technology.

FIG. 16 is an illustration of a mapping matrix generated during a retrieval routine, in accordance with at least some non-limiting embodiments of the present technology.

FIG. 17 is an illustration of searching operations executed on the mapping matrix of FIG. 16, in accordance with at least some non-limiting embodiments of the present technology

FIG. 18 is an illustration of a retrieval routine, in accordance with at least some non-limiting embodiments of the present technology.

FIG. 19 is a scheme-block representation of a method executable by the platform server, in accordance with at least some non-limiting embodiments of the present technology.

FIG. 20 is a scheme-block representation of an other method executable by the platform server, in accordance with at least some non-limiting embodiments of the present technology.

FIG. 21 is a scheme-block representation of a further method executable by the platform server, in accordance with at least some non-limiting embodiments of the present technology.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "client device" is any computer hardware that is capable of running software appropriate to the relevant task at hand. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

With these fundamentals in place, we will now consider some non-limiting examples to illustrate various implementations of aspects of the present technology.

## Computer system

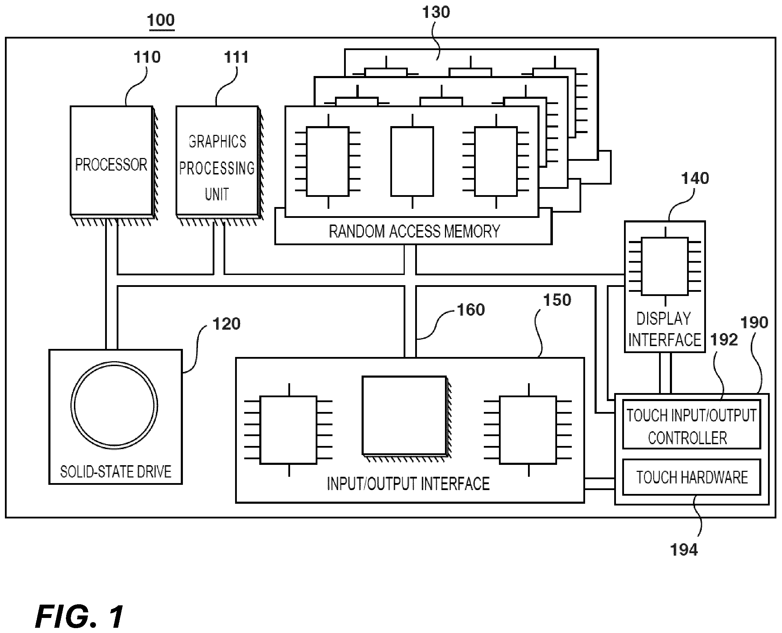

With reference to FIG. 1, there is depicted a computer system 100 suitable for use with some implementations of the present technology. The computer system 100 comprises various hardware components including one or more single or multi-core processors collectively represented by a processor 110, a graphics processing unit (GPU) 111, a solid-state drive 120, a random-access memory 130, a display interface 140, and an input/output interface 150.

According to implementations of the present technology, the solid-state drive 120 stores program instructions suitable for being loaded into the random-access memory 130 and executed by the processor 110 and/or the GPU 111. For example, the program instructions may be part of a library and/or an application.

Communication between the various components of the computer system 100 may be enabled by one or more internal and/or external buses 160 (e.g. a PCI bus, universal serial bus, IEEE 1394 "Firewire" bus, SCSI bus, Serial-ATA bus, etc.), to which the various hardware components are electronically coupled.

The input/output interface 150 may be coupled to a touchscreen 190 and/or to the one or more internal and/or external buses 160. It is noted that some components of the computer system 100 can be omitted in some non-limiting embodiments of the present technology. For example, the keyboard and the mouse (both not separately depicted) can be omitted, especially (but not limited to) where the computer system 100 is implemented as a compact electronic device.

Broadly speaking, the touchscreen 190 may comprise touch hardware 194 and a touch input/output controller 192 allowing communication with the display interface 140 and/or the one or more internal and/or external buses 160. In some embodiments, the touch hardware 194 may comprise pressure-sensitive cells embedded in a layer of a display allowing detection of a physical interaction between a user and the display.

It should be noted that various implementations of the computer system 100 are contemplated. As it will become apparent from the description herein further below, one or more computer system connected over communication network may be implemented similarly to the computer system 100, without departing from the scope of the present technology.

## Networked system

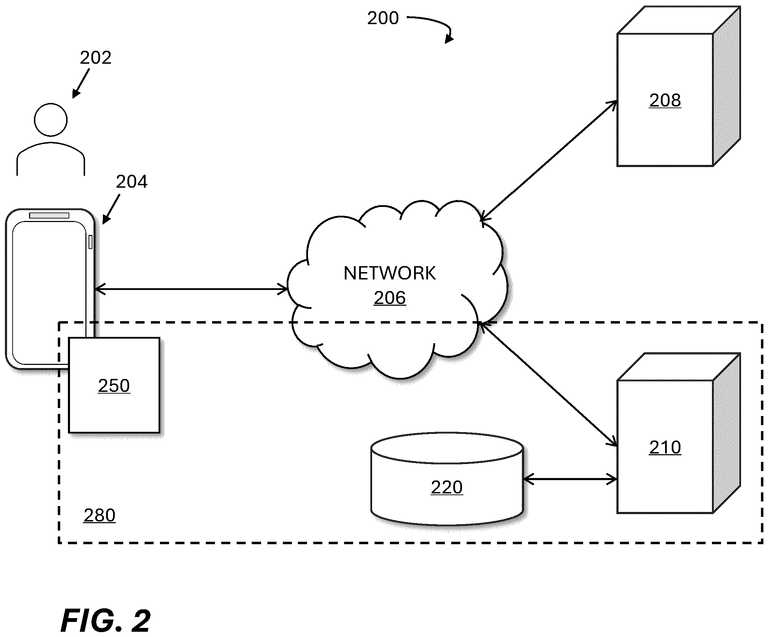

Referring to FIG. 2, there is shown a schematic diagram of a system 200, the system 200 being suitable for implementing non-limiting embodiments of the present technology. It is to be expressly understood that the system 200 as depicted is merely an illustrative implementation of the present technology. Thus, the description thereof that follows is intended to be only a description of illustrative examples of the present technology.

Broadly speaking, the system 200 is configured for performing data retrieval operations. To that end, the system 200 comprises *inter alia* an electronic device 204 associated with the user 202, a resource server 208, a platform server 210 and a database system 220.

For example, the user 202 may submit a given query *via* the electronic device 204 to the platform server 210 which, in response, is configured to provide search results to the user 202. The server 210 generates these search results based on information that has been retrieved from, for example, the resource server 208 and stored in the database system 220. These search results provided by the system 200 may be relevant to the submitted query. Some functionality of components of the system 200 will now be described in greater detail.

As mentioned above, the system 200 comprises the electronic device 204 associated with the user 202. As such, the electronic device 204, or simply "device" 204 can sometimes be referred to as a "client device", "end user device" or "client electronic device". It should be noted that the fact that the electronic device 204 is associated with the user 202 does not need to suggest or imply any mode of operation - such as a need to log in, a need to be registered, or the like.

In the context of the present specification, unless provided expressly otherwise, "electronic device" or "device" is any computer hardware that is capable of running a software appropriate to the relevant task at hand. Thus, some non-limiting examples of the device 204 include personal computers (desktops, laptops, netbooks, etc.), smartphones, tablets and the like. The device 204 comprises hardware and/or software and/or firmware (or a combination thereof), as is known in the art, to execute a music streaming application 250.

Generally speaking, the music streaming application 250 is a "front-end" component of a music streaming platform 280 for delivering audio content to users over the network 206. It can be said that the platform server 210 and the database system 220 are "back-end" components of the music streaming platform 280. In one non-limiting implementation of the present technology, the music streaming platform 280 may be operated by Deezer™.

It should be expressly understood that the music streaming platform 280 may be supported *via* additional components to those non-exhaustively mentioned above. In other words, additional front-end and/or back-end components of the music streaming platform 280, to those illustrated in FIG. 2, are also contemplated in at least some implementations and without departing from the scope of the present technology.

In some implementations, the music streaming platform 280 may be supported by a cloud-based infrastructure for scalability and enabling quick access to a music library and efficient handling of user data. It is contemplated that the music streaming platform 280 may use encryption protocols to secure user data and ensure privacy. In other implementations, the music streaming platform 280 may also be supported by a content delivery network to optimize streaming quality and/or reduce latency by distributing content from one or more servers (such as the platform server 210, for example) geographically closer to the electronic device 204.

Generally speaking, the music streaming platform 280 may offer its users access to a vast library of songs, albums, and/or artists across various genres and/or languages. For example, the user 202 can search for specific tracks, artists, albums, and/or playlists using search functionalities enabled by the platform server 210. Additionally, discovery features may allow the user 202 to browse by genre, explore curated playlists, and/or receive content recommendations based on their listening habits and/or patterns.

In some implementations, the music streaming platform 280 may be configured to support real-time streaming of music tracks over the communication network 206. It is also contemplated that the music streaming platform 280 may also enable the user 202 to download songs for offline playback, allowing for uninterrupted access without connection to the network 206. The music streaming platform 280 may also support different audio quality settings, allowing the user 202 to choose between standard or high-fidelity streaming, for example, based on their preferences, internet bandwidth, and/or subscription model. In some implementations, the music streaming platform 280 may also enable real-time display of song lyrics, access to a wide range of podcasts, including exclusive content and/or personalized recommendations, and streaming of live radio stations, live concerts, podcasts and/or events.

In some implementations, the music streaming platform 280 may offer a variety of personalization features, with user accounts (e.g., data stored by the database system 220) enabling the storage of listening history, playlists, and preferences. For example, the user 202 can create, edit, and share their own playlists. In other implementations, the music streaming platform 280 may employ one or more AI-driven algorithms to suggest new music tailored to individual habits and/or patterns. It is also contemplated that social features may be used by the music streaming platform to enhance user experience by allowing users to share songs, albums, and playlists with other users *via* social media and/or within the app 250. For example, collaborative playlists can be created and edited by multiple users, and a social feed displays friends' listening habits, new releases, and curated recommendations.

It should be noted that the user 202 may, or may not, need to be subscribed to the music streaming platform 280 for making use of the music streaming platform 280. For example, a monetization model may include a "freemium" service, offering a free version supported by advertisements and/or a "premium service", which is an ad-free version requiring a subscription fee. Premium subscribers may gain access to exclusive releases, early access to new music, and other perks.

In some implementations, the music streaming platform 280 may be designed to be compatible with various devices, including smartphones, tablets, desktop computers, smart TVs, and wearable technology (e.g., a smartwatch). It is contemplated that the music streaming platform 280 may enable seamless synchronization of user data across multiple devices, allowing the user 202 to continue their listening experience uninterrupted from different devices. It is also contemplated that the music streaming platform 280 may be integrateable with other apps and/or services, such as social media platforms, smart home devices, and/or car entertainment systems, for example, and without departing from the scope of the present technology.

Returning to the description of FIG. 2, the system 200 comprises the communication network 206. In one non-limiting example, the communication network 206 may be implemented as the Internet. In other non-limiting examples, the communication network 206 may be implemented differently, such as any wide-area communication network, local-area communication network, a private communication network and the like. In fact, how the communication network 206 is implemented is not limiting and will depend on *inter alia* how other components of the system 200 are implemented.

The purpose of the communication network 206 is to communicatively couple at least some of the components of the system 200 such as the device 204, the resource server 208 and the platform server 210. For example, this means that the resource server 208 is accessible *via* the communication network 206 by the device 204. In another example, this means that the resource server 208 is accessible *via* the communication network 206 by the platform server 210. In a further example, this means that the platform server 210 is accessible *via* the communication network 206 by the device 204.

The communication network 206 may be used in order to transmit data packets amongst the device 204, the resource server 208 and the platform server 210. For example, the communication network 206 may be used to transmit data requests from the device 204 to the platform server 210. In another example, the communication network 206 may be used to transmit the data responses from the platform server 210 to the device 204.

As mentioned above, the resource server 208 can be accessed *via* the communication network 206. The resource server 208 may be implemented as conventional computer server. In a non-limiting example of an embodiment of the present technology, a given one of the resource server 208 may be implemented as a Dell™ PowerEdge™ Server running the Microsoft™ Windows Server™ operating system. The resource server 208 may also be implemented in any other suitable hardware and/or software and/or firmware or a combination thereof. Although in FIG. 2 a single resource server is illustrated, it should be understood that the resource server 208 may be embodied as a plurality of resource servers implemented *via* single or different operators, without departing from the scope of the present technology.

The resource server 208 is configured to host (web) resources that can be accessed by the device 204 and/or by the platform server 210. Which type of resources the resource server 208 is hosting is not limiting. However, in some embodiments of the present technology, the resources may comprise digital content such as text files, audio files, video files, and the like. The resource server 208 may be accessed by the device 204 and/or by the platform server 210 in order to retrieve digital content stored on the resource server 208.

The system 200 comprises the platform server 210 that may be implemented as a conventional computer server. In an example of an embodiment of the present technology, the platform server 210 may be implemented as a Dell™ PowerEdge™ Server running the Microsoft™ Windows Server™ operating system. Needless to say, the platform server 210 may be implemented in any other suitable hardware and/or software and/or firmware or a combination thereof. In the depicted non-limiting embodiment of present technology, the platform server 210 is a single server. In alternative non-limiting embodiments of the present technology, the functionality of the platform server 210 may be distributed and may be implemented *via* multiple servers.

Generally speaking, the platform server 210 is under control and/or management of a music streaming service provider such as, for example, an operator of the Deezer™ music streaming platform. As such, the platform server 210 may be configured to host one or more components of the music streaming platform 280 for providing digital content to one or more users of the music streaming platform 280.

For example, the platform server 210 may receive the data requests from the device 204 indicative of a content query submitted by the user 202. The platform server 210 may perform a search responsive to the submitted content query for generating content results that are relevant to the submitted query. As a result, the platform server 210 may be configured to generate the data responses indicative of the content results and may transmit the data responses to the device 204 for consumption by the user 202 via the music streaming application 250.

The content results generated for the submitted query may take many forms. However, in one non-limiting example of the present technology, the content results generated by the platform server 210 may be indicative of digital content that is relevant to the submitted query. How the platform server 210 is configured to determine and retrieve digital content that is relevant to the submitted query will become apparent from the description herein.

The platform server 210 may be configured to "visit" resources accessible *via* the communication network 206 and to retrieve digital content for further use. For example, the platform server 210 may be configured to access the resource server 208 and to retrieve digital content hosted by the resource server 208. The platform server 210 may be configured to periodically access one or more resources over the communication network 206 for retrieving new and/or updated digital content, without departing from the scope of the present technology.

The database system 220 is configured to store and manage audio segments, and audio fingerprints, enabling efficient retrieval operations for the platform server 210.

The database system 220 may comprise a database that stores audio segments as well as associated metadata about the audio segments, such as song title, artist, album, and timestamps. In some embodiments, the database includes tables for storing the audio segments and their associated metadata, where each record in the segment table contains one or more unique IDs based on one or more respective fingerprints, the fingerprint data, and references to the metadata table. Efficient storage mechanisms may be implemented in the database system 220 for managing large volumes of data, and retrieval mechanisms support fast access and querying of the data, enabling real-time performance.

As it will be discussed in greater details herein further below, the database system 220 may store data (such as an index, for example) to be used by the platform server 210 during one or more processing operations (such as hosting an indexing engine, for example).

**Processing pipeline**

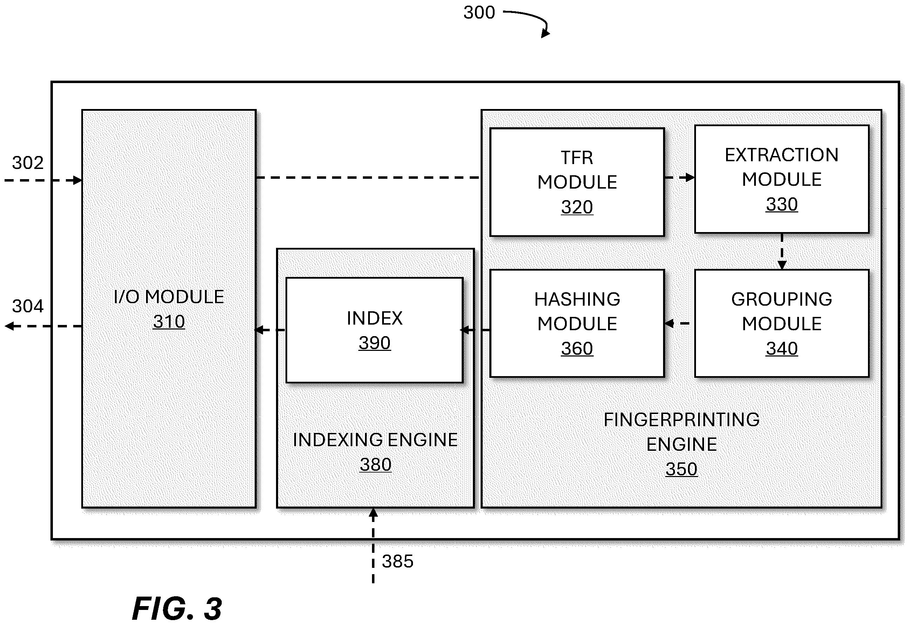

With reference to FIG. 3, there is depicted a processing pipeline 300 executable by the platform server 210 in at least some embodiments of the present technology. It is to be expressly understood that the processing pipeline 300 as depicted is merely an illustrative implementation of the present technology. Thus, the description thereof that follows is intended to be only a description of illustrative examples of the present technology.

It should be noted that one or more modules illustrated in FIG. 3 may be implemented by the platform server 210 and/or the database system 220 and/or the client device 204. In FIG. 3, the term "module" may refer to a combination of one or more computer-implemented techniques executed by one or more hardware processor for performing one or more corresponding processing operations. The processing pipeline 300 may be executed by the server 210 for performing one or more retrieval operations on an index 390 using a query 302 containing an audio segment.

Broadly speaking, the processing pipeline 300 begins with an Input/Output (I/O) module 310 acquiring the audio segment, a fingerprinting engine 350 generating a fingerprint for the audio segment, and an indexing engine 380 generating retrieval results. The fingerprinting engine 350 comprises a Time-Frequency Representation (TFR) module 320 configured to generate a time-frequency representation of the audio segment, an extraction module 330 configured to identify and extract features from the audio segment, based on a plurality of peaks from TFR(s) of the audio segment, a grouping module 340 configured to form groups within the plurality of peaks and a hashing module 360 configured to generate hashes based on features associated with respective groups of peaks. A fingerprint for the audio segment may comprise the plurality of hashes generated by the hashing module and potentially other information about the hashes. Various modules will now be described.

The I/O module 310 is configured to manage acquisition and transmission of requests and responses for retrieval operations executed on an index 390 of an indexing engine 380. The I/O module 310 may handle inputs of the query audio segment from a variety of sources. In some embodiments, the I/O module 310 may be configured to verify whether the audios segment is correctly formatted for processing. The I/O module 310 also manages output of retrieval results, facilitating communication with the user devices and/or other systems. For example, the I/O module 310 may ensure that a response 304 is transmitted to a computer system from which the query 302 originated.

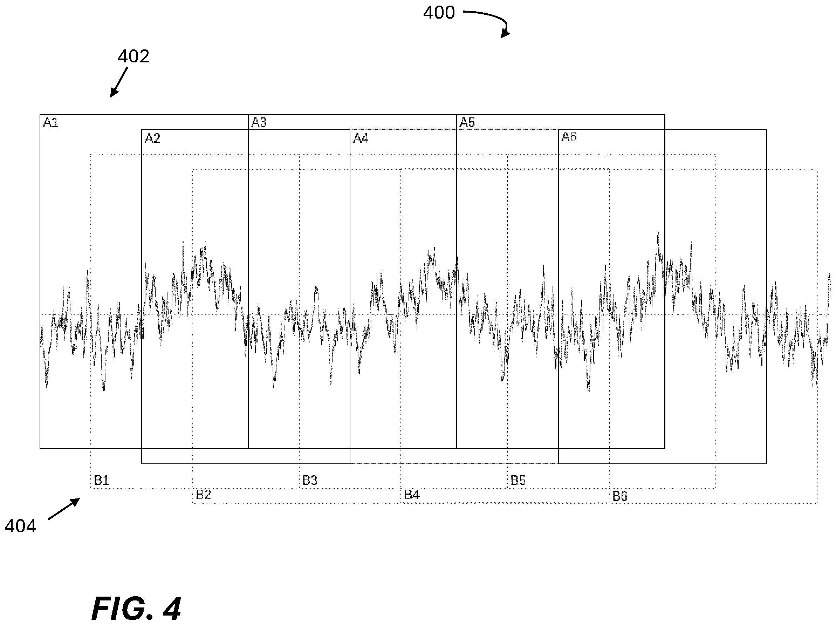

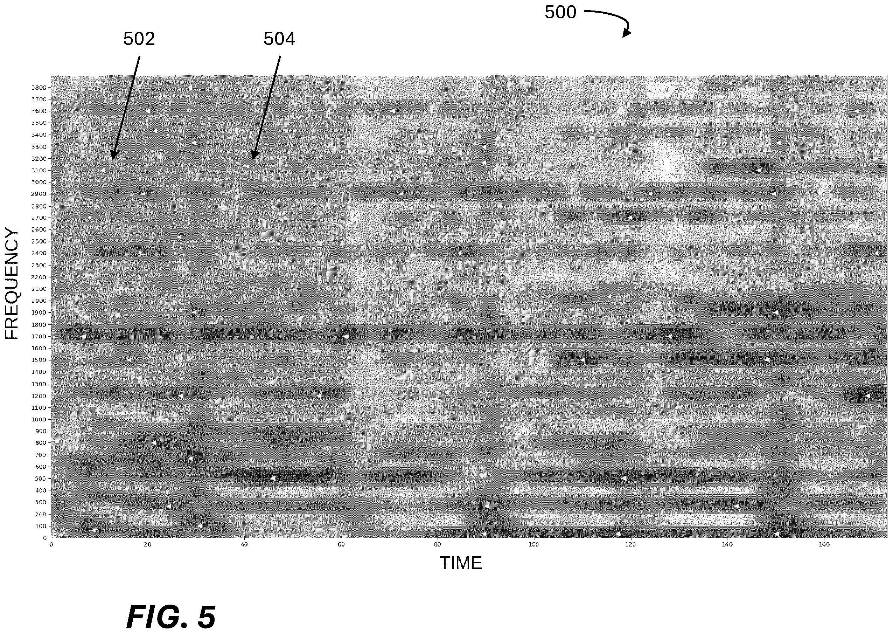

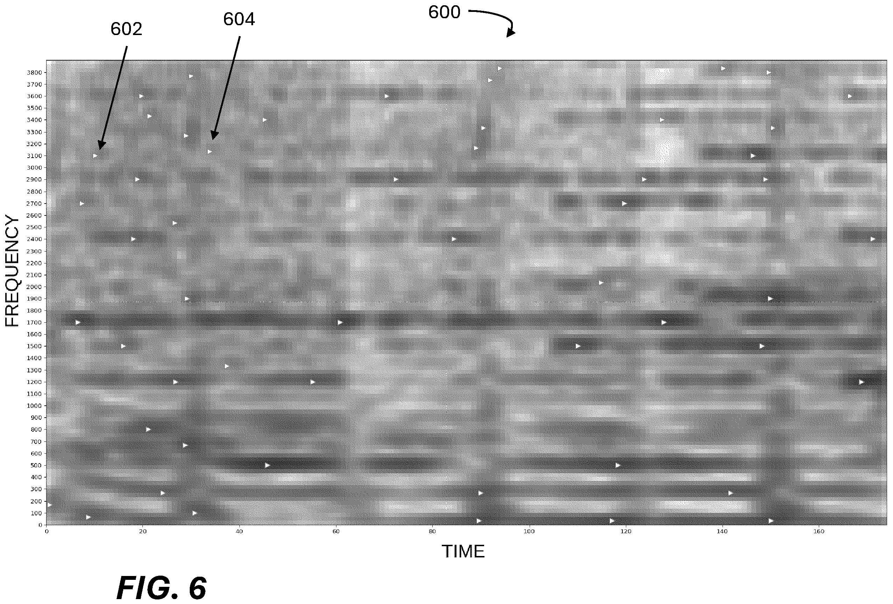

The TFR module 320 is configured to convert an audio segment from a time-domain representation to a time-frequency domain representation. In one non-limiting example, the TFR module 320 may be configured to generate one or more data structures called "spectrograms" based on the audio segment. Broadly speaking, a spectrogram is a map of the audio segment in a time-frequency-amplitude space, providing a visual representation of the signal's frequency and amplitude content over time. As it will be discussed in greater details herein further below, the TFR module 320 may be configured to employ an audio segment 400 (see FIG. 4) for generating a first TFR 500 (see FIG. 5) and a second TFR 600 (see FIG. 6).

In some embodiments, the TFR module 320 may be configured to execute a Discrete Fourier Transform (DFT) algorithm. For example, the TFR module 320 may be inputted with a time-domain audio segment $x(n)$. The DFT algorithm may decompose the input audio segment into sinusoidal components using the following equation (1):

$$X[k] = \sum_{n=0}^{N-1} x[n]e^{-j\frac{2\pi}{N}kn}$$

$$(1)$$

wherein $N$ is a number of points in the input signal. The output may be in a form of a TFR $X(k)$, where $k$ represents a respective frequency bin.

In other embodiments, the TFR module 320 may be configured to execute a Short-Time Fourier Transform (STFT) algorithm. For example, the TFR module 320 may be inputted with a time-domain audio segment $x(n)$, a window function $w(n)$, and hop size $H$. The STFT algorithm may be configured the execute an operation for each time frame $m$, in accordance with the following equation (2):

$$X[m,k] = \sum_{n=0}^{N-1} x[n+mH]w[n]e^{-j\frac{2\pi}{N}kn}$$

$$(2)$$

wherein $N$ is a number of points in the input signal. The output may be in a form of a TFR $X(m, k)$, where m represents a respective time frame, and $k$ represents a respective frequency bin.

In further embodiments, the TFR module 320 may be configured to execute a Mel-Frequency Cepstral Coefficients (MFCC) algorithm. For example, the TFR module 320 may be inputted with a time-domain audio segment $x(n)$. The TFR module 320 may pre-emphasize the signal to boost high frequencies, frame the signal, apply a window function, compute an FFT for each frame, apply a mel filter bank to the magnitude spectrum, compute the logarithm of the mel-filtered spectrum, and apply a Discrete Cosine Transform (DCT) to obtain MFCCs. The output may be a set of coefficients representing a mel-frequency spectrum.

In additional embodiments, the TFR module 320 may be configured to execute a Constant-Q Transform (CQT) algorithm. The CQT algorithm is configured to generate TFR(s) with a logarithmically spaced frequency axis, closely matching the human auditory perception and musical pitch structure. Developers have realized that TFRs with a logarithmically spaced frequency axis may be desirable for music information retrieval and audio fingerprinting applications. For example, the TFR module 320 may be inputted with a time-domain audio segment *x(n)*. The TFR module 320 may define a frequency range by selecting a minimum and maximum frequencies of interest and a number of bins per octave. The TFR module 320 may compute the quality (Q) factor in accordance with the following equation (3):

$$Q = \frac{1}{2^{1/b} - 1} \tag{3}$$

wherein *b* is a number of bins per octave.

The TFR module 320 may also generate filters for a respective frequency bin $f_k$, where the filter has a center frequency is $f_k$ and a bandwidth $f_k/Q$. The TFR module 320 may apply the filters by convolving the audio segment *x(n)* with respective filters. The filters are logarithmically spaced, meaning the length of the filter and the number of points in the convolution vary for each frequency bin. The TFR module 320 may be configured to perform operation(s) in accordance with the following equation (4):

$$X[k] = \sum_{n=0}^{N-1} x[n] h_k[n] e^{-j2\pi \frac{f_k}{f_s} n} \tag{4}$$

wherein $h_k(n)$ is the impulse response of a filter for frequency bin $f_k$, and $f_s$ is a sampling frequency. The output is a TFR *X(k)* with logarithmically spaced frequency bins.

In yet other embodiments, the TFR module 320 may be configured to execute a combination of DFT, STFT, MFCC, and/or CQT algorithms without departing from the scope of the present technology. It is contemplated that the TFR module 320 may also use other algorithms such as Variable Q Transform (VQT), wavelet transform, gabor transform, S transform, and the like.

Returning to the description of FIG. 3, the extraction module 330 is configured to identify and extract key features from the TFR(s) generated by the TFR module 320. The extraction module 330 may be configured to locate amplitude peaks and/or other artifacts within a given TFR. For example, the amplitude peaks located by the extraction module 330 may be used as features that are likely to be specific to the given audio segment. As a result, it can be said that the extraction module 330 may be configured to select a plurality of amplitude peaks form a given TFR as descriptors of the audio segment for further processing.

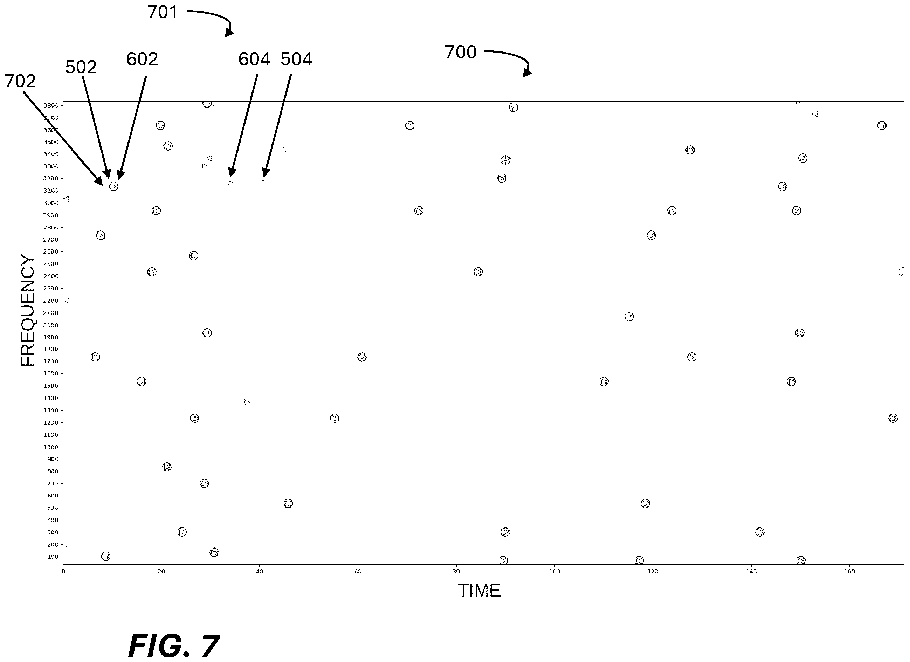

As it will be described in greater details herein further below, the platform server 210 may make use of the TFR module 320 for generating a "combined" TFR for a given audio segment based on more than one TFR generated for the given audio segment. For example, the platform server 210 may make use of the TFR module 320 to generate the first TFR 500 and the second TFR 600, and then generate a combined TFR 700 (see FIG. 7), and from which the extraction module 330 may extract amplitude peaks.

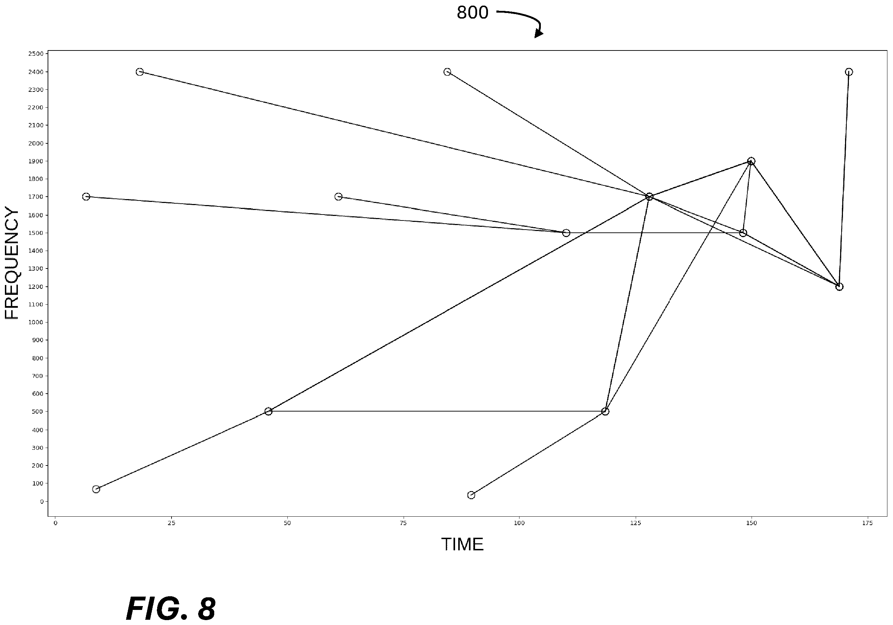

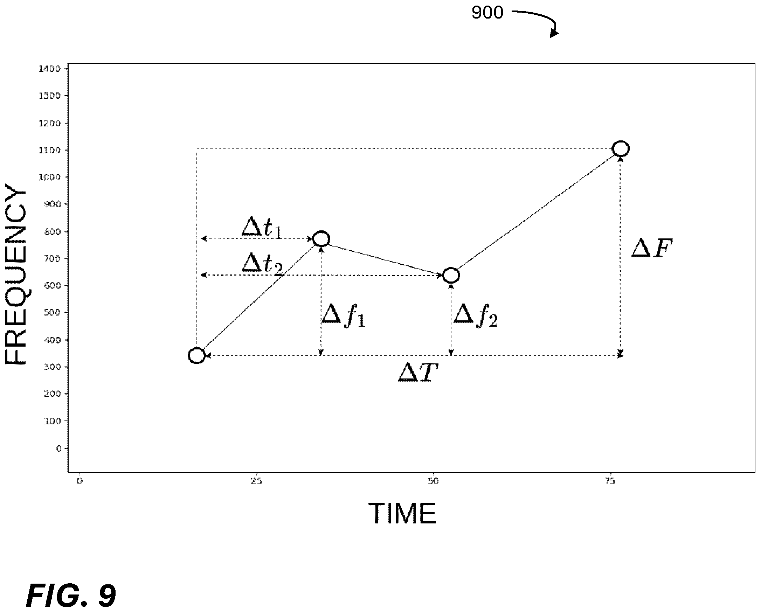

The grouping module 340 is configured to organize the plurality of amplitude peaks into groups of peaks. For example, the grouping module 340 may be configured to execute a clustering algorithm to generate a given group of peaks based on their frequency-based and/or time-based proximity amongst each other and/or other criteria pre-determined by an operator of the system. It can be said that the grouping module 340 prepares the plurality of amplitude peaks for further processing. As it will be described in greater details herein further below, the platform server 210 may make use of the grouping module 340 to determine a plurality groups of peaks 800 (see FIG. 8) and/or a group of peaks 900 (see FIG. 9).

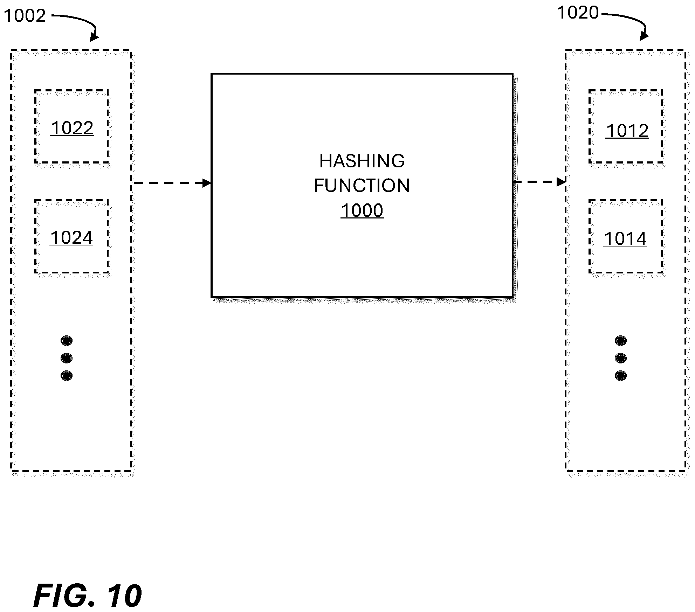

The hashing module 360 is configured to convert each fingerprint into a plurality of hashes. It can also be said that the hashing module 360 may be configured to generate a given hash using features and/or other data associated with a given group of peaks. To that end, the hashing module 360 may apply a given hashing function during the encoding process on a given fingerprint and/or features and/or other data associated with the respective groups of peaks, thereby producing a unique ID, or "hash", for each peak group. As it will be described in greater details herein further below, the platform server 210 may make use of the hashing module 360 for generating a first hash 1012 based on a first group of peaks 1022, and a second hash 1014 based on a second group of peaks 1024(see FIG. 10). The first hash 1012 and the second hash 1014 may be used for efficient indexing and retrieval operations.

As a result, it can be said that the fingerprinting engine 350 is configured to generate a "fingerprint" formed from features and/or other data associated with each group of amplitude peaks acquired from the grouping module 340. Broadly speaking, a fingerprint encapsulates information representative of one or more groups, encoding the distinctive characteristics of the peaks in each of the groups into a concise format.

As it will be described in greater details herein further below, the platform server 210 may make use of the fingerprinting engine 350 to determine a fingerprint and generate a corresponding set of hashes for performing a search operation on the index 390. For example, the platform server 210 may be configured to access one or more index structures, and where information contained in the one or more hashes is used to identify potential matches of corresponding stored audio segments. The platform server 210 may retrieve and potentially rank matched audio segments based on their relevance to the query audio segment, facilitating accurate retrieval operations, and provide to the I/O module 310 one or more (potentially ranked) search results to be provided as the response 304 to the query 302.

The index 390 is a data organization system supporting efficient retrieval of audio segments. It includes one or more inverted indexes, where hashes generated by the hashing module 360 can be used to identify matched posting lists allowing the system to locate and retrieve audio segments that match the query audio segment. As it will become apparent from the description herein further below, the index 390 may comprise more than one index structure, and more specifically a sequence of more than one index structures that are sequentially accessed by the platform server 210 for retrieving potential matches.

The indexing engine 380 is configured for organizing the audio segments and/or fingerprints into one or more searchable indexes, facilitating efficient retrieval operations. It employs a data structure optimized for search and retrieval, such as hash tables, tree structures, and the like. The index 390 may be configured to balance between retrieval speed and accuracy, ensuring efficient handling of large-scale audio segment data and/or fingerprint data. An indexing algorithm may process incoming audio fingerprints and "map" them onto one or more index structure using techniques like quantization, hashing, or dimensionality reduction. The indexing engine 380 may support dynamic updates, allowing new audio segments and/or new fingerprints to be added to the index 390 in real-time and potentially without significant performance degradation. For example, an update request 385 may be provided to the indexing engine for updating one or more index structures in the index 390. It is contemplated that one or more similarity metrics and nearest neighbor search techniques may be used to identify the best candidate matches in the index 390. The indexing engine 380 may employ various optimization techniques to enhance retrieval speed and/or accuracy, including caching frequently accessed fingerprints, parallel processing, and/or load balancing.

**Combined TFRs**

As previously alluded to, in some embodiments, the platform server 210 is configured to generate a combined TFR for a given audio segment based on a first TFR generated using the given audio segment and a second TFR generated using the given audio segment. It is contemplated, that more than two TFRs generated using the given audio segment may be used to generate the combined TFR for the given audio segment. A number of TFRs used for generating a combined TFR for the given audio segment may depend on *inter alia* various implementations of the present technology.

In the context of the present technology, a "sliding window" is a computer-implemented process employed to segment an audio segment into overlapping and/or nonoverlapping frames, or "instances" of the sliding window, and extract features from each frame. The sliding window is characterised by a window size indicative of a length of each frame/instance in units or milliseconds. The sliding window can also be characterized by a "hop" size indicative of a start of consecutive frames/instances in units or milliseconds, determining the overlap between consecutive frames/instances. The sliding window can also be characterized by a window function indicative of transformation (e.g., Hamming, Hann) applied to each frame/instance. It should be noted that the platform server 210 may be configured to execute a given sliding window on a given audio segment at different starting units or milliseconds along the given audio segment.

In one embodiment of the present technology, the platform server 210 may be configured to execute a TFR generation process on a given audio segment, in the time domain, using a first sliding window. For example, a first instance of the first sliding window may be applied on units [0,64], sometimes called samples, of the given audio segment/sample received by the platform server 210. In this example, the platform server 210 may be configured to compute a first peak set based on the content within the first instance of the first sliding window, and then slide along the given audio segment with a predetermined step. A similar process may be performed for a second instance of the first sliding window for computing an other first peak set based on the content within the second instance of the first sliding window.

It this embodiment, it can be said that the first sliding window is characterized by a starting unit (in this case unit "0"), a size (in this case "64" units), and a predetermined sliding step. It can be said that after executing multiple iterations of this "compute-slide-compute" process using the first sliding window, the platform server 210 may generate a first TFR comprising a first plurality of peaks. The first plurality of peaks may include first peak sets generated for respective instances of the first sliding window.

In the same embodiment of the present technology, the platform server 210 may be configured to execute an other TFR generation process on the given audio segment using a second sliding window. For example, a first instance of the second sliding window may be applied on units [32,96] of the given audio segment. In this example, the platform server 210 may be configured to compute a second peak set based on the content within the first instance of the second sliding window, and then slide along the given audio segment with a predetermined step. A similar process may be performed for a second instance of the second sliding window for computing an other second peak set based on the content within the second instance of the second sliding window.

It this embodiment, the second sliding window is characterized by a starting unit (in this case unit "32"), a size (in this case "64" units), and a pre-determined sliding step. It can be said that after executing multiple iterations of the "compute-slide-compute" process using the second sliding window, the platform server 210 may generate a second TFR comprising a second plurality of peaks. The second plurality of peaks may include second peak sets generated for respective instances of the second sliding window.

It should be noted that instances of the first sliding window are "offset", or "dephased", from the instances of the second sliding window. In this embodiment, this is due to the second sliding window being applied onto the given audio segment at a starting unit that is different from the starting unit at which the first sliding window is being applied on the given audio segment. As a result, the first peak set generated for the first instance of the first sliding window may be different from the second peak set generated for the first instance of the second sliding window due to them covering different corresponding portions of the given audio segment. Developers of the present technology have devised methods, devices, processors and systems that leverage the ability to generate potentially different peak sets by different sliding windows when applied on a same audio segment.

In this embodiment, the platform server 210 is configured to generate the first TFR using the first peak sets generated by different instances of the first sliding window. In this embodiment, the platform server 210 is configured to generate the second TFR using the second peak sets generated by different instances of the second sliding window.

In this embodiment, the platform server 210 is configured to compare the first peak sets from the first TFR against the second peak sets of the second TFR. It can be said that the first plurality of peaks generated using the first sliding window may be compared against the second plurality of peaks generated using the second sliding window.

In this embodiment, based on the information available in the first plurality of peaks and in the second plurality of peaks, the platform server 210 is configured to generate a combined plurality of peaks for the given audio segment and to be used for feature extraction.

It should be noted that comparing the first plurality of peaks against the second plurality of peaks may allow the platform server 210 to in a sense "filter out" unwanted noise present in the first plurality of peaks and/or in the second plurality of peaks. In other words, stable peaks from the first plurality of peaks and from the second plurality of peaks can be retained for feature extraction, and thereby generating more accurate descriptors of the given audio segment.

Developers have realized that a comparison of the first plurality of peaks against the second plurality of peaks generated for the same audio segment may allow generating a comparatively more accurate fingerprint for the given audio segment. Developers have realized that a comparison between the first plurality of peaks and the second plurality of peaks generated for the same audio segment may allow generating a comparatively more unique fingerprint for the given audio segment.

With reference to FIG. 4, there is depicted an audio segment 400 acquired by the platform server 210, in one non-limiting embodiment of the present technology. For example, the platform server 210 may acquire the audio segment 400 *via* the query 302 illustrated in FIG. 3. It is contemplated that the audio segment 400 may be only a portion of an audio sample acquired via the query 302, without departing from the scope of the present technology.

In this embodiment, the platform server 210 is configured to execute a first sliding window 402 onto the audio segment 400. The platform server 210 is configured to apply different instances of the sliding window 402 onto the audio segment 400. For example, the platform server 210 may apply instances A1, A2, A3, A4, A5 and A6 onto the audio segment 400, each covering a corresponding portion of the audio segment 400. In this embodiment, consecutive instances of the first sliding window 402 partially overlap. In this embodiment, consecutive instances of the first sliding window 402 have a mutual overlap of 50% (e.g., step size of the first sliding window 402 is half the window size of the first sliding window 402).

With reference to FIG. 5, there is depicted the first TFR 500 generated by the platform server 210 applying the first sliding window 402 onto the audio segment 400. In FIG. 5, left-facing triangles indicate a first plurality of peaks in the first TFR 500. For example, the first plurality of peaks comprises a first peak 502 and an other first peak 504.

Returning to the description of FIG. 4, in this embodiment, the platform server 210 is configured to execute a second sliding window 404 onto the audio segment 400. The platform server 210 is configured to apply different instances of the sliding window 404 onto the audio segment 400. For example, the platform server 210 may apply instances B1, B2, B3, B4, B5 and B6 onto the audio segment 400, each covering a corresponding portion of the audio segment 400. In this embodiment, consecutive instances of the first sliding window 404 partially overlap. In this embodiment, consecutive instances of the second sliding window 404 have a mutual overlap of 50% (e.g., step size of the second sliding window 404 is half the window size of the second sliding window 404).

In this embodiment, the first sliding window 402 and the second sliding window 404 are dephased from one another, as their respective instances do not start and the same starting units or ms along the audio segment 400. In this embodiment, the instances of the second sliding window 404 are dephased by 25% from the instances of the first sliding window 402 (e.g., starting units for instances of the second sliding window 404 are offset by a quarter of the window size from starting units of instances of the first sliding window 402).

It should be noted that in this embodiment, the window size and the sliding step of the first sliding window 402 and of the second sliding window 404 are the same.

In at least some embodiments of the present technology, at least one instance of the first sliding window 402 may begin at a different starting unit than at least one instance of the second sliding window 404.

In this embodiment, it can be said that the instance B1 of the second sliding window 404 is dephased from the instance A1 of the first sliding window 402 by 25%. In other embodiments, a phase factor other than 25% may be employed by the platform server 210. For example, the instance B1 may be dephased from the instance A1 by 5%, 10%, 15%, 20%, and the like.

It should be noted that the phase factor may take other forms. For example, the phase factor may not be expressed as an offset relative to a given window size. In this example, the phase factor may be expressed as a difference between a starting unit of the instance B1 and a starting unit of the instance A1. Other forms for the phase factor are also contemplated without departing from the scope of the present technology.

With reference to FIG. 6, there is depicted the second TFR 600 generated by the platform server 210 applying the second sliding window 404 onto the audio segment 400. In FIG. 6, right-facing triangles indicate a second plurality of peaks in the second TFR 600. For example, the second plurality of peaks comprises a second peak 602 and an other second peak 604.

With reference to FIG. 7, the platform server 210 is configured to generate the combined TFR 700 comprising a combined plurality of peaks 701 based on the first plurality of peaks from the first TFR 500 and the second plurality of peaks from the second TFR 600. In this embodiment, the platform server 210 is configured to compare the first plurality of peaks against the second plurality of peaks to determine which peaks are in a sense "stable peaks", which are peaks that appear across different TFRs generated for the same audio segment 400.

In FIG. 7, the left-facing triangles indicate the first plurality of peaks in the first TFR 500 (*idem* to FIG. 5) and the right-facing triangles indicate the second plurality of peaks in the second TFR 600 (*idem* to FIG. 6), and circles indicate the combined plurality of peaks 701 determined by the platform server 210 based on the first plurality of peaks from the first TFR 500 and the second plurality of peaks from the second TFR 600.

In this embodiment, the platform server 210 is configured to compare the first plurality of peaks from the first TFR 500 against the second plurality of peaks from the second TFR 600. If a given first peak from the first plurality of peaks substantially coincides with a given second peak from the second plurality of peaks, the platform server 210 may determine that at least one of the given first peak and the given second peak is a "stable peak" across the first TFR 500 and the second TFR 600. It should be noted that a pair of peaks may substantially coincide if they are located on respective TFRs within a pre-determined margin of error.

In this embodiment, the first peak 502 and the second peak 602 are located within a pre-determined margin of error from one another. As a result, the platform server 210 may be configured to determine a stable peak 702 based on the first peak 502 and the second peak 602. In some embodiments, the platform server 210 may identify one of the first peak 502 and the second peak 602 as the stable peak 702. In other embodiments, the platform server 210 may determine the stable peak 702 as a combination of the first peak 502 and the second peak 602. For example, the stable peak 702 may be an average between the first peak 502 and the second peak 602 associated with an average position of the first peak 502 and the second peak 602.

In this embodiment, the other first peak 504 and the other second peak 604 are located outside the pre-determined margin of error from one another. As a result, the platform server 210 may be configured to determine that the other first peak 504 and the other second peak 604 do not correspond to a stable peak and/or are not to be used for determining a combined peak. It can be said that the platform server 210 may be configured to discard the other first peak 504 and the other second peak 604 from further processing.

With reference to FIG. 8, there is depicted a plurality of groups of peaks 800 generated by the platform server 210 based on the combined plurality of peaks 701. A number of peaks in a given group of peaks and/or a number of groups of peaks may vary depending on *inter alia* various implementations of the present technology. Grouping of peaks from the combined plurality of peaks may be achieved using known techniques.

With reference to FIG. 9, there is depicted a set of features for a group of peaks 900. The platform server 210 may be configured to determine the set of features for the group of peaks 900, comprising time-related features between one or more peaks in the group and/or frequency related features between the one or more peaks in the group. Additional features are also contemplated as is known in the art. The set of features can be used to embed a group descriptor. Known embedding techniques can be used. A plurality of embeddings for the plurality of groups of peaks can form a given fingerprint for a plurality of group of peaks, including the group of peaks 900, generated for a given audio segment.

With reference to FIG. 10, there is depicted a fingerprint 1002 generated by the platform server 210 for the audio segment 400. In this embodiment, the platform server 210 may be configured to generate a sequence of hashes 1020 based on a fingerprint 1002 represented by a plurality of groups of peaks.

It can be said that the platform server 210 may be configured to generate *inter alia* the first hash 1012, a second hash 1014, based on embedded data about a first group of peaks 1022 determined for the audio segment 400, and embedded data about a second group of peaks 1024 determined for the audio segment 400. How the hashing function 1000 is implemented is not particularly limiting.

Broadly speaking, a hashing function is a mathematical algorithm that takes an input (e.g., fingerprint and/or embedded. Data about a plurality of groups of peaks), processes it, and generates a fixed-size string of characters, known as a hash or hash value. This output is typically smaller in size than the input data. The hashing function 1000 is designed to be deterministic - that is, a same input always produces the same hash. Hashing functions are commonly used in data retrieval applications.

### Indexing engine

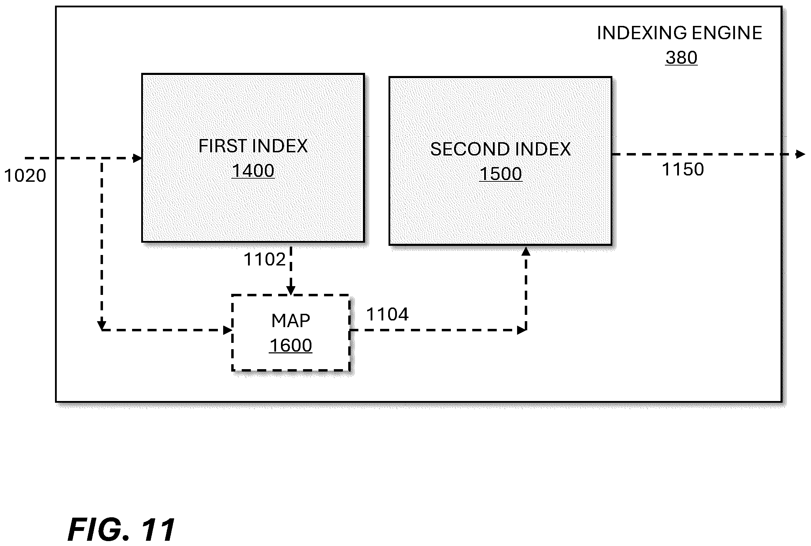

With reference to FIG. 11, there is depicted the indexing engine 380, as contemplated in at least some embodiments of the present technology. The platform server 210 is configured to provide a sequence of hashes 1020 as a query to the indexing engine 380. In response, the indexing engine 380 is configured to retrieve search results 1150 using the information from the sequence of hashes 1020.

In this embodiment, the indexing engine 380 comprises a first indexing structure 1400, a second indexing structure 1500, also referred to herein as a first index 1400 and a second index 1500. The platform server 210 may be configured to generate a map 1600 for communicating between the first index 1400 and the second index 1500. To that end, the platform server 210 may generate the map 1600 based on the sequence of hashes 1020 and retrieved data 1102 from the first index 1400. The platform server 210 may be configured to use an output 1104 from the map 1600 for accessing data in the second index 1500. How the first indexing structure 1400, the second indexing structure 1500, and the map 1600 are generated and used during data retrieval will be discussed below.

Without wishing to be bound to any specific theory, a fingerprint database can comprise a list of couples of hashes and positions $(h_j, x_j)$ associated to document IDs $d_k$ and stored using one or several inverted indexes. A query $Q$ is a set of pairs $(h_j, \widehat{x_j})$ denoting hashes and positions computed from a query fingerprint. We call a set of query positions $\widehat{x_i}$ "sequentially compatible" with a set of positions in the database $x_i$ if their elements are equal up to one common offset, i.e., if there exists an integer offset $\delta$ such that $\widehat{x_i} = x_i + \delta$. The identification task consists in performing a "lookup operation" of $Q$ on the inverted indexes that hold the fingerprint database, and to return the set of documents $d_k$ matching $Q$.

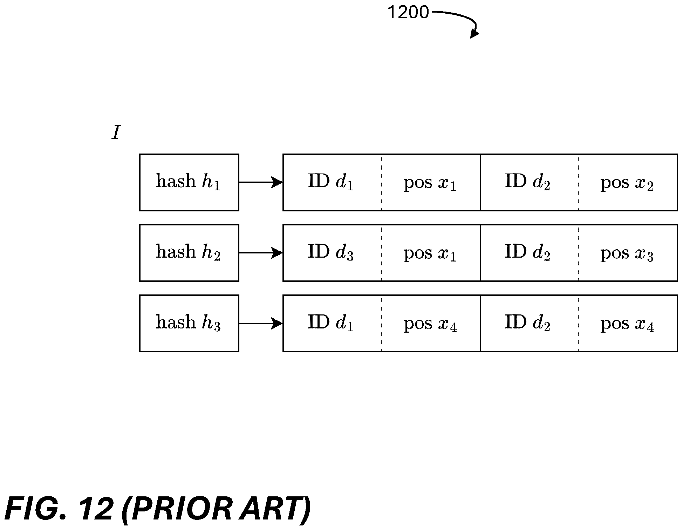

With reference to FIG. 12, there is depicted a standard inverted index 1200. The standard inverted index $I$ maps hashes $h_i$ to the set of documents $d_k$ and the positions $x_j$ where $h_i$ appears in each document. A lookup operation on $I$ consists in defining a function $f$ that maps a query hash $h_i$ and a query position $\hat{x}_i$ to every

document $d_k$ and its position ( $x_j - \widehat{x_i}$ ) relative to $Q$ where $h_i$ appears in $d_k$.

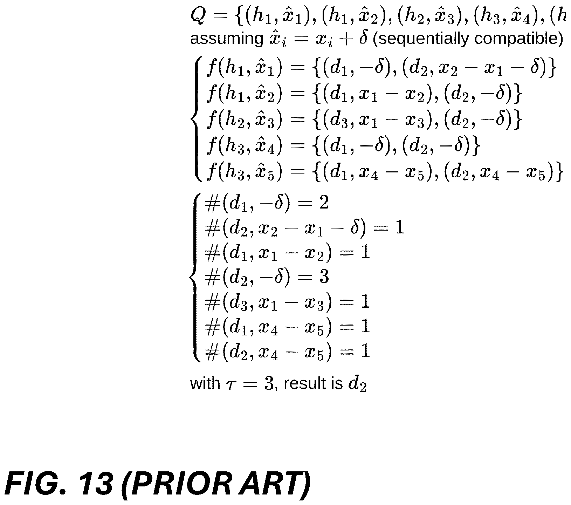

With reference to FIG. 13, looking up a query $Q$ consists in applying $f$ to every ($h_i, \widehat{x_i}$) couple in $Q$, thus computing relative positions $y_j - \widehat{x_i}$ , and finally counting with function # the occurrences of each couple of document and shifted position ($d_k, y_j - \widehat{x_i}$ ). Filtering out the number of occurrences of each document below a threshold $\tau$ yields identification results.

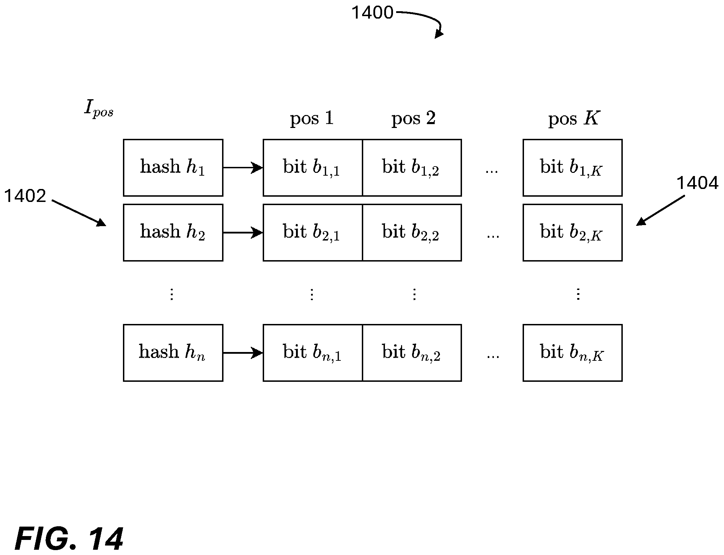

With reference to FIG. 14, there is depicted the first (inverted) index 1400 with sequential position mapping, as contemplated in at least some embodiments of the present technology. We define $I_{pos}$ as a positional index mapping hashes $h_i$ to a set of binary values, each value $b_{i,j}$ indicating whether or not $h_i$ appears at position $x_j$ at least once in the database. In this embodiment, $I_{pos}$ is the first index 1400. The first index 1400 comprises a plurality of posting lists, comprising a posting list 1404. For example, the posting list 1404 is associated with an index key 1402.

It should be noted that the index key 1402 is indicative of a given hash. In this non-limiting example, the given hash is $h_2$. It should be noted that the posting list 1404 comprises a list of bits, each one being indicative of whether or not at least one audio segment in the database comprises the given hash $h_2$ at a corresponding position. As a result, the bit b2,2, for example, is indicative of whether at least one audio segment in the database includes the hash $h_2$ at position "2". The position may be associated with a positional order within a digital item and/or a chronological order within the digital item.

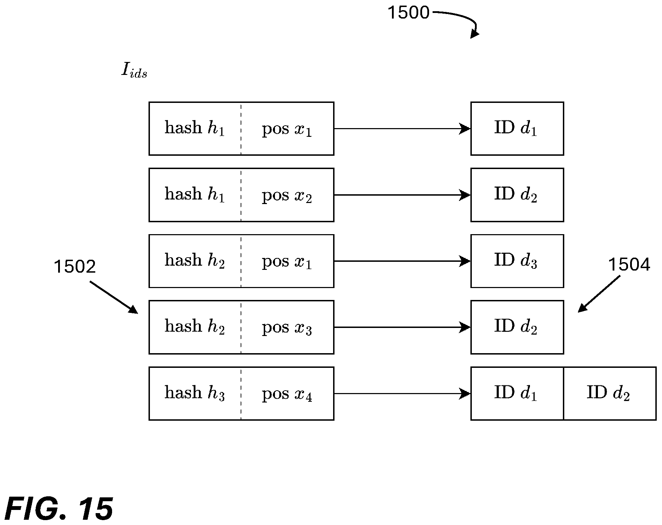

With reference to FIG. 15, there is depicted the second (inverted) index 1500 for mapping couples of hash and positions to the set of documents, as contemplated in at least some embodiments of the present technology. We additionally define $I_{ids}$ as an inverted index mapping couples of hash and position $(h_i, x_i)$ to the set of documents $d_k$ where $h_i$ appears exactly at position $x_i$. A lookup operation on $I_{ids}$ consists in defining a function g that maps a hash and a position $(h_i, x_i)$ to every $d_k$ where $h_i$ appears exactly at position $x_i$ . For example, the posting list 1504 is associated with an index key 1502.

It should be contemplated that when the second index 1500 is accessed with data indicative of the index key 1502, being a hash $h_2$ positioned at a position "3", the corresponding posting list includes the ID of document $d_2$. It can be said that access keys to the second index 1500 comprise position data about respective hashes. It should be noted that the posting lists of the second index 1500 requires comparatively less storage space than posting lists from the index 1200.

In response to receiving the query 302 comprising data indicative of the audio segment 400, the platform server 210 is configured to generate the map 1600 for executing a retrieval sequence, in which the first index 1400 and the second index 1500 are accessed sequentially be the platform server 210 for generating the search result 1150.

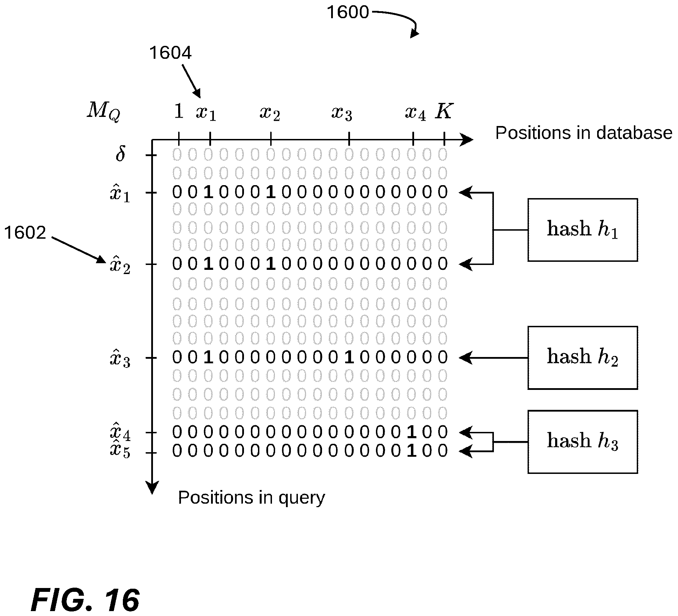

It should be noted that the platform server 210 may be configured to generate the map 1600 for a given query in a form of a digital matrix. With reference to FIG. 16, there is depicted a digital matrix representing the map 1600, as contemplated in at least some embodiments of the present technology. A lookup operation on $I_{ids}$ may require the use of an intermediary binary matrix $M_Q$. For a query $Q$, the platform server 210 may be configured to define $M_Q\left(\widehat{x_i}, x_j\right) = 1$ if $h_i$ appears in $Q$ at position $\widehat{x_i}$ and $h_i$ also appears at least once in the database at position $x_j$, and 0 otherwise. $M_Q$ can be constructed by requesting $I_{pos}$ for every hash in $Q$ and assigning the retrieved binary values to row $\hat{x}_i$.

It can be said that the platform server 210 may be configured to generate a digital matrix, comprising a plurality of rows and including a row 1602 and a plurality of columns and including a column 1604. The plurality of rows is associated with query hashes and respective positions thereof in the data acquired via the query 302. The plurality of columns is associated with stored hashes and respective positions thereof in the data retrieved from the first index 1400.

It is contemplated that the platform server 210 is configured to generate, for a given query audio segment and using a first index, a corresponding digital matrix for accessing a second index. The rows for respective query hashes can be retrieved from the first index 1400. In this embodiment, the platform server 210 is configured to retrieve a row 1602 from the first index 1400 by accessing a posting list associated with the hash $h_2$. In this example, the platform server 210 may retrieve the posting list 1404. Similarly, the platform server 210 may be configured to retrieve rows associated with respective hashes from the fingerprint of the audio segment 400. Developers have realized that generating the corresponding digital matrix may allow for efficient retrieval of data from the second index and/or from the index engine overall.

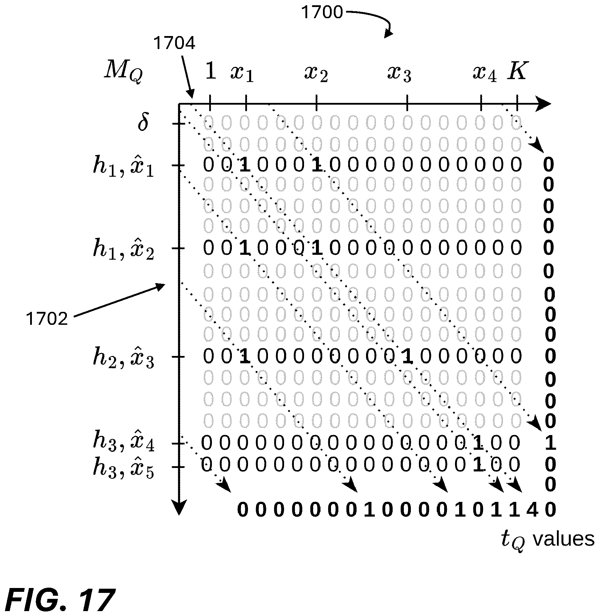

With reference to FIG. 17, there is depicted a plurality of diagonals, comprising a first diagonal 1702 and a second diagonal 1704, and respective diagonal values for $M_Q$. Since rows in $M_Q$ are laid out according to hash positions in the query, and columns in $M_Q$ correspond to positions where hashes appear in the database, all positions with a value set to 1 in a k-diagonal of $M_Q$ are sequentially compatible with corresponding positions in $Q$. It is contemplated that the sequential compatibility of a given diagonal in the digital matrix may correspond to a chronological compatibility of a given diagonal in the digital matrix.

In some embodiments, the platform server 210 may determine values $t_Q$, as a function mapping an integer $k$ to the sum of all binary values in the $k$-diagonal of $M_Q$. In this example, $t_Q$ value for the first diagonal 1702 is "1", while $t_Q$ value for the second diagonal 1704 is "4". In this example, the platform server 210 is configured to use a sub-sequence of query pairs including query hashes and hash positions in the audio segment 400, and which corresponds to the $k$-diagonal in the digital matrix with highest $t_Q$ value.

It should be noted that although in this embodiment only the $k$-diagonal in the digital matrix with highest $t_Q$ value is used, this might not be the case in each and every embodiment. In other embodiments, a plurality of $k$-diagonal in the digital matrix with highest $t_Q$ values may be used for accessing the second index 1500. In these embodiments, one or more diagonals with $t_Q$ values over a pre-determined threshold may be used for acceding the second index 1500, without departing from the scope of the present technology.

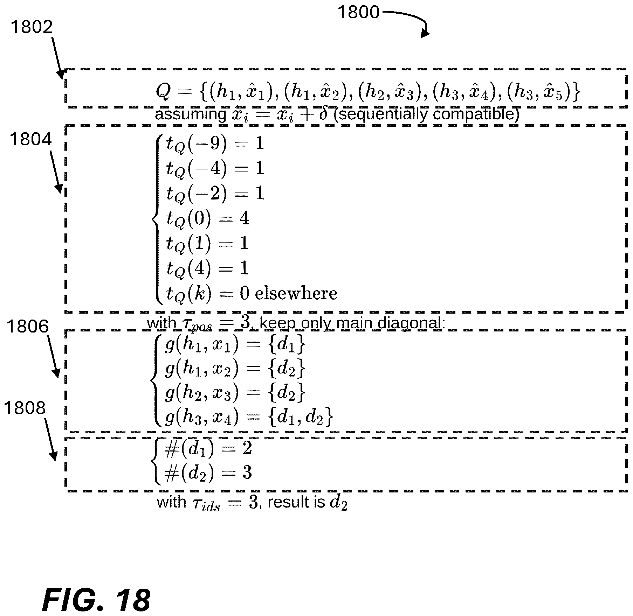

With reference to FIG. 18, there is depicted a query process, as contemplated in at least some embodiments of the present technology. Looking up a query $Q$ consists in building $M_Q$ from $I_{pos}$, then computing $d_Q$ from its k-diagonals and, when $t_Q(k)$ is above a threshold $\tau_{pos}$, applying g to every $(h_i, x_j)$ such that $M_Q(h_i, x_j) = 1$ in such $k$-diagonal to get documents $d_k$. Filtering out the number of occurrences # of each document below a threshold $\tau_{ids}$ yield identification results.

In this example, the query 302 can be processed by the platform server 210 for generating data 1802 indicative of a plurality of hashes and corresponding positions in the audio segment 400. A plurality of $t_Q$ values 1804 are computed based on the digital matrix. A plurality of requests 1806 to the second index 1500 are generated by the platform server 210 and corresponding posting lists form the second index 1500 are retrieved. The platform server 210 is configured to determine an occurrence count 1808 for respective document IDs retrieved *via* the corresponding posting lists.

## Computer-implemented methods

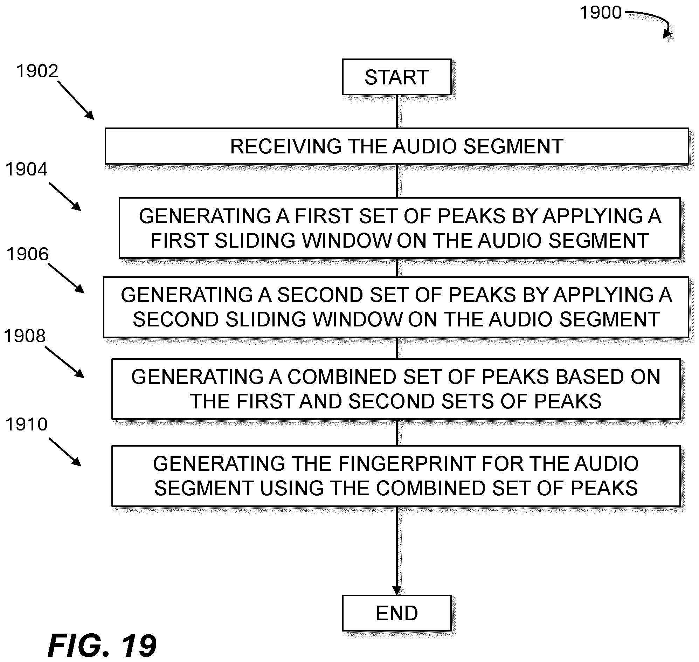

With reference to FIG. 19, there is depicted a scheme-block illustration of a method 1900 executable by one or more hardware processors. In at least some embodiments of the present technology, the platform server 210 may be configured to execute one or more steps of the method 1900. In other embodiments, the device 204 may be configured to locally execute one or more steps of the method 1900, without departing from the scope of the present technology.

## STEP 1902: receiving the audio segment

The method 1900 begins at step 1902 with receiving a given audio segment. In some embodiments, the audio segment may be a query audio segment from the query 302 processed *via* the processing pipeline 300 (see FIG. 3). For example, the audio segment 400 may be acquired during the step 1902.

It should be noted that the processing pipeline 300 may be executed by the platform server 210 and/or by the device 204 for performing one or more retrieval operations using the query 302. In one embodiment, the given audio segment may be representative of an audio recording of an environment of the device 204.

### STEP 1904: generating a first set of peaks by applying a first sliding window on the audio segment

The method 1900 continues to step 1904 with generating a first set of peaks by applying a first sliding window on the audio segment. In some embodiments, the platform server 210 may be configured to generate the first TFR 500 comprising the first plurality of peaks. The first plurality of peaks comprises the first peak 502 and the other first peak 504.

For example, the first plurality of peaks may be generated by executing a CQT routine (execution of a CQT algorithm). In another example, the first plurality of peaks may be generated by executing a DFT routine (execution of a DFT algorithm).

The platform server 210 may be configured to apply different instances of the sliding window 402 onto the audio segment 400 for generating the first plurality of peaks. For example, the platform server 210 may apply the instances A1, A2, A3, A4, A5 and A6 onto the audio segment 400, each covering a corresponding portion of the audio segment 400. Consecutive instances of the first sliding window 402 may partially overlap. In some embodiments, consecutive instances of the first sliding window 402 may have a mutual overlap of at least one of 50%, 25%, 10%, and 5%.

### STEP 1906: generating a second set of peaks by applying a second sliding window on the audio segment

The method 1900 continues to step 1906 with generating a second set of peaks by applying a second sliding window on the audio segment. In some embodiments, the platform server 210 may be configured to generate the second TFR 600 comprising the second plurality of peaks. The second plurality of peaks comprises the second peak 602 and the other second peak 604. For example, the second plurality of peaks may be generated by executing a CQT routine (execution of a CQT algorithm). In another example, the second plurality of peaks may be generated by executing a DFT routine (execution of a DFT algorithm).

The platform server 210 may be configured to apply different instances of the sliding window 404 onto the audio segment 400 for generating the second plurality of peaks. For example, the platform server 210 may apply the instances B1, B2, B3, B4, B5 and B6 onto the audio segment 400, each covering a corresponding portion of the audio segment 400. Consecutive instances of the second sliding window 404 may partially overlap. In some embodiments, consecutive instances of the second sliding window 404 may have a mutual overlap of at least one of 50%, 25%, 10%, and 5%.

It should be noted that window instances of the second sliding window applied during the step 1906 are offset from window instances of the first sliding window applied during the step 1904.

In some embodiments, the first plurality of peaks may be generated via generation of a first spectrogram using the given audio segment, and the second plurality of peaks may be generated via generation of a second spectrogram using the same audio segment.

### STEP 1908: generating a combined set of peaks based on the first and second sets of peaks

The method 1900 continues to step 1908 with generating a combined set of peaks based on the first and the second sets of peaks. The combined set of peaks includes peaks common to the first and second sets of peaks. It is contemplated that the combined set of peaks excludes at least one peak from at least one of the first and the second set of peaks.

In some embodiments, the platform server 210 may be configured to compare the first plurality of peaks against the second plurality of peaks. If a given first peak from the first plurality of peaks substantially coincides with a given second peak from the second plurality of peaks, the platform server 210 may determine that at least one of the given first peak and the given second peak is a "stable peak" across the first set of peaks and the second set of peaks. It should be noted that a pair of peaks may substantially coincide if they are located on respective TFRs within a pre-determined margin of error (e.g., pre-determined threshold distance).

In some embodiment embodiments, a first peak and a second peak can be located within a pre-determined margin of error from one another. As a result, the platform server 210 may be configured to determine a stable peak based on the first peak and the second peak. In some embodiments, the platform server 210 may identify one of the first peak and the second peak as the stable peak. In other embodiments, the platform server 210 may determine the stable peak as a combination of the first peak and the second peak. For example, the stable peak 702 may be an average between the first peak and the second peak associated with an average position of the first peak and the second peak.

In other embodiments, an other first peak and an other second peak may be located outside the pre-determined margin of error from one another. As a result, the platform server 210 may be configured to determine that the other first peak and the other second peak do not correspond to a stable peak and/or are not to be used for determining a combined peak. It can be said that the platform server 210 may be configured to discard the other first peak and the other second peak from further processing.

In further embodiments, the platform server 210 may generate a third TFR with a third set of peaks by applying a third sliding window on the audio segment, the window instances of the second sliding window and the first sliding window being offset from window instances of the third sliding window. In these embodiments, the platform server 210 may be configured to generate the combined set of peaks based on the first, second and third sets of peaks, and without departing from the scope of the present technology. In these embodiments, a stable peak may be determined if a first peak, a second peak, and a third peak are located within the pre-determined margin of error.

### STEP 1910: generating the fingerprint for the audio segment using the combined set of peaks

The method 1900 continues to step 1910 with generating the fingerprint for the given audio segment using the combined set of peaks. The fingerprint may be generated using features extracted from the combined set of peaks.

In some embodiments, the platform 210 may generate one or more groups of peaks based on the combined set of peaks, and extract features from the one or more groups of peaks. The extracted features may be used to form the fingerprint. In some embodiments, the platform server 210 may be configured to generate embeddings based on extracted features for respective groups of peaks. The extracted features may comprise frequency-based features amongst peaks in the group of peaks and/or time-based features amongst peaks in the group of peaks.

In some embodiments, the method 1900 may further comprise retrieving a stored audio segment from an index using the fingerprint. To that end, the platform server 210 may generate one or more hashes using the fingerprint and access a given index using the one or more hashes to retrieve the stored audio segment.

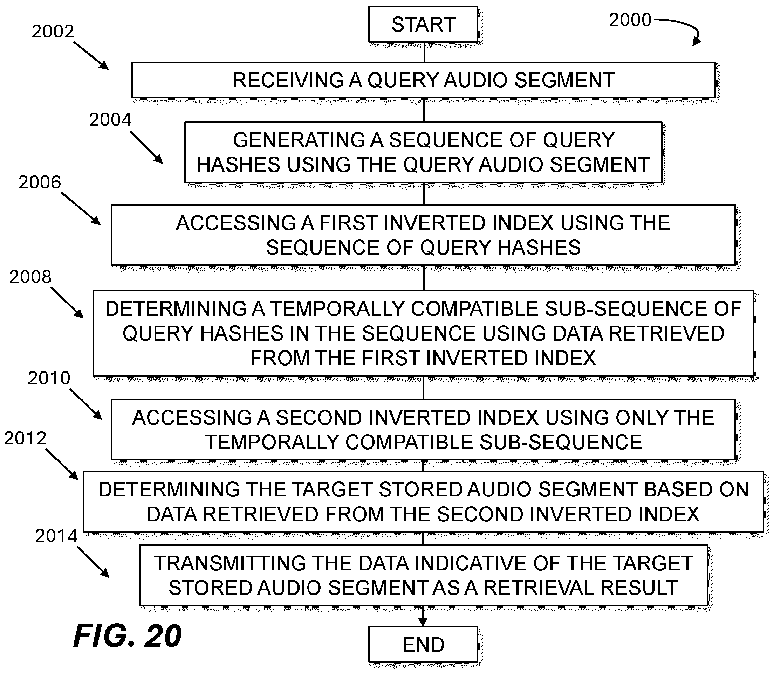

With reference to FIG. 20, there is depicted a scheme-block illustration of a method 2000 executable by one or more hardware processors. In at least some embodiments of the present technology, the platform server 210 may be configured to execute one or more steps of the method 2000. In other embodiments, the device 204 may be configured to locally execute one or more steps of the method 2000, without departing from the scope of the present technology.

### STEP 2002: receiving a query audio segment

The method 2000 begins at step 2002 with receiving a query audio segment. In some embodiments, the audio segment may be a query audio segment from the query 302 to be processed *via* the processing pipeline 300 (see FIG. 3). For example, the audio segment 400 may be acquired during the step 2002.

### STEP 2004: generating a sequence of query hashes using the query audio segment

The method 2000 continues to step 2004 with generating a sequence of query hashes using the query audio segment. For example, the platform server 210 may be configured to generate the sequence of hashes 1020 based on the fingerprint 1002 represented by the plurality of groups of peaks.

It can be said that the platform server 210 may be configured to generate *inter alia* the first hash 1012, a second hash 1014, based on embedded data about a first group of peaks 1022 determined for the audio segment 400, and embedded data about a second group of peaks 1024 determined for the audio segment 400.

It should be noted that query hashes within the sequence of hashes 1020 are associated with respective temporal positions within the query audio segment 400. It can be said that the sequence of hashes 1020 are ordered in accordance with a temporal order of groups of peaks generated for the query audio segment 400.

In some embodiments, the platform server 210 may be configured to determine amplitude peaks for the given query audio segment, and by determining a sequence of groups of peaks using the amplitude peaks, and by generating the sequence of query hashes based on the sequence of groups of peaks using a hashing function.

In one example, with reference to FIG. 18, the platform server 210 may be configured to generate the data 1802 based on a given query, and comprising a sequence of query hashes and respective temporal positions in the query audio segment. Each query hash in the sequence is associated with a respective temporal position of that query hash in the query audio segment.

### STEP 2006: accessing a first inverted index using the query hashes within the sequence of query hashes

The method 2000 continues to step 2006 with accessing a first inverted index using the query hashes within the sequence of query hashes generated during the step 2004. In some embodiments, the platform server 210 may be configured to access the first index 1400 (see FIG. 14) using the query hashes within the sequence of query hashes 1020.

The first index 1400 comprises a plurality of posting lists, comprising the posting list 1404. For example, the posting list 1404 is associated with the index key 1402. It should be noted that the index key 1402 is indicative of a given hash. It should be noted that the posting list 1404 comprises a list of bits, each one being indicative of whether or not at least one audio segment in the database comprises a given hash at a corresponding position. For example, the bit b2,2 is indicative of whether at least one audio segment in the database includes the hash $h_2$ at position "2". The position may be associated with a positional order within a digital item and/or a chronological/temporal order within the digital item.

In some embodiments, it is contemplated that the first index 1400 is recurrently updated based on new audio segments received for indexation by the indexing engine 380, without departing from the scope of the present technology.

It is contemplated that the platform server 210 may be configured to access the first index 1400 for retrieving data associated with one or more posting lists in the first index 1400.

**STEP 2008: determining a temporally compatible sub-sequence of query hashes in the sequence using data retrieved from the first inverted index**

The method 2000 continues to step 2008 with determining a temporally compatible sub-sequence of query hashes in the sequence of query hashes using the data retrieved from the first inverted index. It should be noted that the temporally compatible sub-sequence includes query hashes associated with a temporal sequence that matches a temporal sequence of same hashes from at least one stored audio segment.

It is contemplated that in some embodiments, at least one query hash in the sequence may be excluded from the temporally compatible sub-sequence.

For example, with reference to FIG. 18, the sequence of query hashes comprises $(h_1, \hat{x}_1)$ $(h_1, \hat{x}_2)$ $(h_2, \hat{x}_3)$ $(h_3, \hat{x}_4)$ $(h_3, \hat{x}_5)$. Based on the data acquired from the first inverted index 1400, the platform server 210 may be configured to determine the temporally compatible sub-sequence $(h_1, x_1)(h_1, x_2)(h_2, x_3)(h_3, x_4)$, which excludes the hash-position pair $(h_3, x_5)$ from the sequence of query hashes. It can be said that this temporally compatible sub-sequence is associated with a temporal sequence that matches a temporal sequence of same hashes in at least one stored audio segment. It can be said that this temporally compatible sub-sequence is associated with a temporal sequence that matches a temporal sequence of same hashes, and where those same hashes are located at the corresponding temporal positions in the same, or different, stored audio segment(s).

In some embodiments, the platform server 210 may be configured to generate a digital matrix based on the sequence $(h_1, \hat{x}_1)$ $(h_1, \hat{x}_2)$ $(h_2, \hat{x}_3)$ $(h_3, \hat{x}_4)$ $(h_3, \hat{x}_5)$ and the data retrieved from the first inverted index. For example, the platform server 210 may be configured to generate the digital matrix in FIG. 16.

The data retrieved from the first inverted index may include a first posting list associated with a corresponding query hash from the sequence. For example, the platform server 210 may retrieve the posting list 1404 (see FIG. 14) of the first index 1400 associated with the query hash h2 from the sequence $(h_1, \hat{x}_1)$ $(h_1, \hat{x}_2)$ $(h_2, \hat{x}_3)$ $(h_3, \hat{x}_4)$ $(h_3, \hat{x}_5)$. It is contemplated that the platform server 210 may retrieve posting lists from the first index 1400 associated with each hash from the sequence $(h_1, \hat{x}_1)$ $(h_1, \hat{x}_2)$ $(h_2, \hat{x}_3)$ $(h_3, \hat{x}_4)$ $(h_3, \hat{x}_5)$ - i.e., posting lists for *h1, h2,* and *h3.* The posting list 1404 is indicative of whether the corresponding query hash, *h2,* is present at a given temporal position in at least one stored audio segment. It is contemplated that the posting list 1404 may be indicative of presence of the corresponding query hash, *h2,* at a variety of different positions within at least one stored audio segment.

Once the digital matrix is generated, the platform server 210 may be configured to determine a diagonal value for a given diagonal in the digital matrix. For example, the platform server 210 may be configured to determine a diagonal value *tq* for the diagonal 1704 (see FIG. 17).

In some embodiments, the platform server 210 may be configured to determine the plurality of $t_Q$ values 1804 (see FIG. 18) which correspond to diagonal values for a plurality of diagonals in the digital matrix.

In some embodiments, the platform server 210 may be configured to determining the temporally compatible sub-sequence using the given diagonal. For example, the platform server 210 may be configured to select a diagonal with a highest diagonal value and determine the hash-position pairs associated with that diagonal. In this example, the hash-position pairs associated with that diagonal are $(h_1, x_1)(h_1, x_2)(h_2, x_3)(h_3, x_4)$.

In some embodiments, during the step 2008 the platform server 210 may be configured to generate a digital matrix, such as the map 1600 (see FIG. 16) based on the sequence of query hashes 1020 and one or more posting lists from the first inverted index 1400 retrieved in response to the step 2004. A given posting list retrieved from the first inverted index 1400 is indicative of a presence of at least one query hash in at least one stored audio segment at a given temporal position in the at least one stored audio segment. The platform server 210 may be configured to determine one or more diagonal values for one or more diagonals in the digital matrix. The platform server 210 may also determine the sub-sequence of temporally compatible query hashes using a given diagonal. In one example, the platform server 210 is configured to use a sub-sequence of query pairs including query hashes and hash positions in the audio segment 400, and which corresponds to the *k*-diagonal in the digital matrix with a highest $t_Q$ value. It should be noted that the so-determined sub-sequence of query hashes comprises query hashes that are present in a same temporal sequence in at least one stored audio segment.

It is contemplated that the platform server 210 may be configured to generate a new digital matrix for each query audio segment received.

**STEP 2010: accessing a second inverted index using only the temporally compatible sub-sequence**

The method 2000 continues to step 2010 with accessing a second inverted index using only the temporally compatible sub-sequence of query hashes. For example, the platform server 210 may be configured to access the second index 1500 (see FIG. 15) using the temporally compatible subsequence $(h_1, x_1)(h_1, x_2)(h_2, x_3)(h_3, x_4)$.

It can be said that the platform server 210 may use hash-position pairs from the temporally compatible sub-sequence as index keys for identifying one or more second posting lists, the one or more second posting lists being indicative of candidate stored audio segments. In this embodiment, the candidate stored audio segments $d1$, and $d2$ may be retrieved based on accessing the second inverted index 1500 using the requests 1806.

For example, the posting list 1504 in the second index 1500 is associated with an index key 1502. It should be contemplated that when the second index 1500 is accessed with data indicative of the index key 1502, being a given hash positioned at a given position, the corresponding posting list includes the ID of stored audio segment(s) in which the given hash is positioned at the given position.

In some embodiments, the platform server 210 may be configured to generate an occurrence count amongst the candidate stored audio segments to determine the target stored audio segment. It is contemplated that the second index 1500 can be recurrently updated based on new audio segments received for indexation by the indexing engine 380. For example, the platform server 210 may be configured to determine the occurrence count 1808 for respective stored audio segment IDs retrieved *via* the corresponding posting lists.

### STEP 2012: determining the target stored audio segment based on data retrieved from the second inverted index

The method 2000 continues to step 2012 with determining the target stored audio segment based on data retrieved from the second inverted index.

In some embodiments, the platform server 210 may be configured to generate an occurrence count amongst the candidate stored audio segments to determine the target stored audio segment. It is contemplated that the second index 1500 can be recurrently updated based on new audio segments received for indexation by the indexing engine 380. For example, the platform server 210 may be configured to determine the occurrence count 1808 for respective candidate stored audio segment IDs retrieved *via* the corresponding posting lists.

In one embodiment, the candidate stored audio segments with a highest occurrence count may be selected as the target stored audio segment. In other embodiments, candidate stored audio segments with occurrence counts higher than a pre-determined threshold may be selected as target stored audio segments.

### STEP 2014: transmitting the data indicative of the target stored audio segment as a retrieval result

The method 2000 continues to step 2012 with transmitting the data indicative of the target stored audio segment as a retrieval result. The data may be transmitted to the device 204, for example. In other embodiments, the data indicative of one or more target stored audio segments may be used for further processing by the platform server 210.

It should be noted that although one or more methods for retrieving target stored audio segments are disclosed herein, retrieval methods for other types of digital items are also contemplated. Developers have realized that inverted indexes can be used in a variety of applications where digital items comprises a sequential relationship amongst content elements within the digital items. In one non-limiting example, a document may have a sequential relationship amongst words within the document. In this non-limiting example, words (and/or hashes generated based on the words) may be associated with respective sequential positions in the document. In another non-limiting example, a video may comprise a sequential relationship amongst frames within the video. In this another non-limiting example, frames (and/or hashes generated based on the frames) may be associated with respective sequential positions in the video.

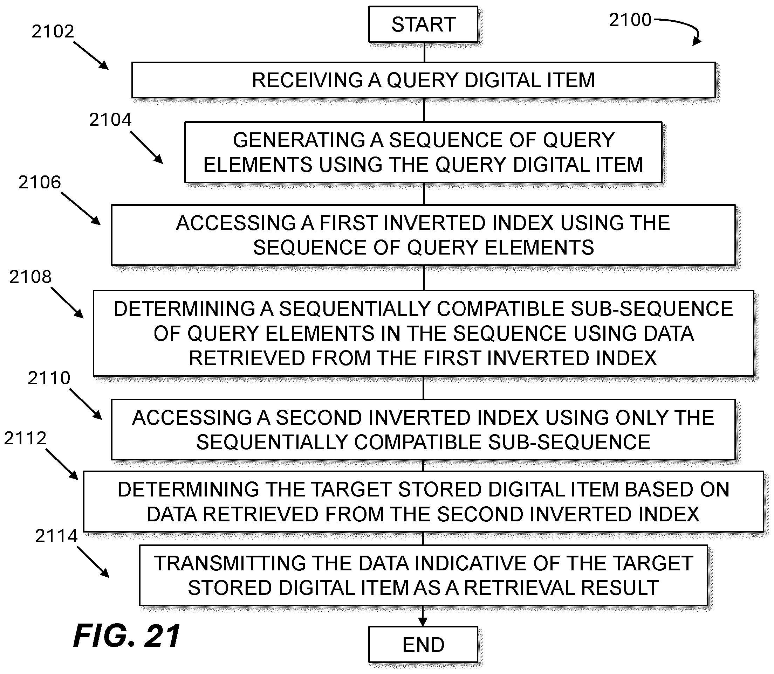

With reference to FIG. 21, there is depicted a scheme-block illustration of a method 2100 executable by one or more hardware processors. In at least some embodiments of the present technology, the platform server 210 may be configured to execute one or more steps of the method 2100. In other embodiments, the device 204 may be configured to locally execute one or more steps of the method 2100, without departing from the scope of the present technology.

### STEP 2102: receiving a query digital item

The method 2100 begins at step 2102 with receiving a query digital item. In some embodiments, the digital item may be a query digital document comprising inter alia a sequence of words. Other types of digital items are also contemplated without departing from the scope of the present technology.

### STEP 2104: generating a sequence of query elements using the query digital item

The method 2100 continues to step 2104 with generating a sequence of query elements using the query digital item. For example, the platform server 210 may be configured to generate a sequence of elements by analyzing the query digital item.

It can be said that the platform server 210 may be configured to generate *inter alia* the first element, a second element, based on data within the query digital item. In one example, the first element and the second element may be words from a query document.

It should be noted that query elements within the sequence of elements are associated with respective positions within the query digital item. It can be said that the sequence of elements are ordered in accordance with their order in the query digital item. In one example, the first element and the second element in the sequence may be order in accordance with the order in which they are found in a query document. Each query element in the sequence is associated with a respective position of that query element in the query digital item.

**STEP 2106: accessing a first inverted index using the query elements within the sequence of query elements**

The method 2100 continues to step 2106 with accessing a first inverted index using the query elements within the sequence of query elements generated during the step 2104.

The first index comprises a plurality of posting lists. For example, a given posting list may be associated with an index key. It should be noted that the index key is indicative of a given element. It should be noted that the posting list comprises a list of bits, each one being indicative of whether or not at least one digital item in the database comprises a given element at a corresponding position. For example, the bit b2,2 is indicative of whether at least one digital item in the database includes the element $e_2$ at position "2". The position may be associated with a positional order within a digital item.

In some embodiments, it is contemplated that the first index is recurrently updated based on new digital items received for indexation, without departing from the scope of the present technology. It is contemplated that the platform server 210 may be configured to access the first index for retrieving data associated with one or more posting lists in the first index.

**STEP 2108: determining a sequentially compatible sub-sequence of query elements in the sequence using data retrieved from the first inverted index**

The method 2100 continues to step 2108 with determining a sequentially compatible sub-sequence of query elements in the sequence of query elements using the data retrieved from the first inverted index. It should be noted that the sequentially compatible sub-sequence includes query elements associated with a sequence that matches a sequence of same elements from at least one stored digital item.

In some embodiments, it is contemplated that at least one query element in the sequence may be excluded from the sequentially compatible sub-sequence.

For example, the sequence of query elements comprises $(e_1, \hat{p}_1) (e_1, \hat{p}_2) (e_2, \hat{p}_3) (e_3, \hat{p}_4) (e_3, \hat{p}_5)$, where

$e_i$ is a given element $i$, and $p_j$ is a given position $j$ of the element $i$ in the corresponding digital item. Based on the data acquired from the first inverted index, the platform server 210 may be configured to determine the sequentially compatible sub-sequence $(e_1, p_1)(e_1, p_2)(e_2, p_3)(e_3, p_4)$, which excludes the element-position pair $(e_3, p_5)$ from the sequence of query elements. It can be said that this sequentially compatible sub-sequence is associated with a sequence that matches a sequence of same elements in at least one stored digital item. It can be said that this sequentially compatible sub-sequence is associated with a positional sequence that matches a positional sequence of same query elements, and where those same query elements are located at the corresponding positions in the same, or different, stored digital item(s).

In some embodiments, the platform server 210 may be configured to generate a digital matrix based on the sequence $(e_1, \hat{p}_1) (e_1, \hat{p}_2) (e_2, \hat{p}_3) (e_3, \hat{p}_4) (e_3, \hat{p}_5)$, and the data retrieved from the first inverted index. The data retrieved from the first inverted index may include a first posting list associated with a corresponding query element from the sequence. For example, the platform server 210 may retrieve a first posting list of the first index associated with the query element $e_2$ from the sequence $(e_1, \hat{p}_1) (e_1, \hat{p}_2) (e_2, \hat{p}_3) (e_3, \hat{p}_4) (e_3, \hat{p}_5)$. It is contemplated that the platform server 210 may retrieve posting lists from the first index associated with each element from the sequence $(e_1, \hat{p}_1) (e_1, \hat{p}_2) (e_2, \hat{p}_3) (e_3, \hat{p}_4) (e_3, \hat{p}_5)$, - i.e., posting lists for $e_1$, $e_2$, and $e_3$. The first posting list is indicative of whether the corresponding query element, $e_2$, is present at a given position in at least one stored digital item. It is contemplated that the first posting list may be indicative of presence of the corresponding query element, $e_2$, at a variety of different positions within at least one stored digital item.

Once the digital matrix is generated, the platform server 210 may be configured to determine a diagonal value for a given diagonal in the digital matrix. In some embodiments, the platform server 210 may be configured to determine a plurality of diagonal values for a plurality of diagonals in the digital matrix.

In some embodiments, the platform server 210 may be configured to determining the sequentially compatible sub-sequence using a given diagonal. For example, the platform server 210 may be configured to select a diagonal with a highest diagonal value and determine the element-position pairs associated with that diagonal. In this example, the element-position pairs associated with that diagonal are $(e_1, p_1)(e_1, p_2)(e_2, p_3)(e_3, p_4)$.

It is contemplated that the platform server 210 may be configured to generate a new digital matrix for each query digital item received.

**STEP 2110: accessing a second inverted index using only the sequentially compatible sub-sequence**

The method 2100 continues to step 2110 with accessing a second inverted index using only the sequentially compatible sub-sequence of query elements. For example, the platform server 210 may be configured to access the second index using the sequentially compatible subsequence $(e_1, p_1)(e_1, p_2)(e_2, p_3)(e_3, p_4)$.

It can be said that the platform server 210 may use element-position pairs from the sequentially compatible sub-sequence as index keys for identifying one or more second posting lists, the one or more second posting list being indicative of candidate stored digital items. In this embodiment, the candidate stored digital items *d1,* and *d2* may be retrieved based on accessing the second inverted index.

For example, the second posting list in the second index may be associated with a given index key. It should be contemplated that when the second index is accessed with data indicative of the given index key, being a given element positioned at a given position, the corresponding second posting list includes the ID of digital items in which the given element is positioned at the given position.

It is contemplated that the second index can be recurrently updated based on new digital items received for indexation.

**STEP 2112: determining the target stored digital item based on data retrieved from the second inverted index**

The method 2100 continues to step 2112 with determining the target stored digital item based on data retrieved from the second inverted index.

In some embodiments, the platform server 210 may be configured to generate an occurrence count amongst the candidate stored digital items to determine the target stored digital item. It is contemplated that the second index can be recurrently updated based on new digital items received for indexation by the indexing engine 380. For example, the platform server 210 may be configured to determine the occurrence count for respective candidate stored digital item IDs retrieved *via* the corresponding posting lists.

In one embodiment, the candidate stored digital items with a highest occurrence count may be selected as the target stored digital item. In other embodiments, candidate stored digital items with occurrence counts higher than a pre-determined threshold may be selected as target stored digital items.

**STEP 2114: transmitting the data indicative of the target stored digital item as a retrieval result**

The method 2100 continues to step 2112 with transmitting the data indicative of the target stored digital item as a retrieval result. The data may be transmitted to the device 204, for example. In other embodiments, the data indicative of one or more target stored digital items may be used for further processing by the platform server 210.

It should be apparent to those skilled in the art that at least some embodiments of the present technology aim to expand a range of technical solutions for addressing a particular technical problem encountered by the conventional digital content item recommendation systems, namely selecting and providing for display digital content items that are relevant to the users.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enj oying other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, subdivided, or re-ordered without departing from the teachings of the present technology. Accordingly, the order and grouping of the steps is not a limitation of the present technology.

**Claims**

1. A method of generating a fingerprint for an audio segment, comprising:

    receiving the audio segment;
    generating a first set of peaks by applying a first sliding window on the audio segment;
    generating a second set of peaks by applying a second sliding window on the audio segment, window instances of the second sliding window being offset from window instances of the first sliding window;
    generating a combined set of peaks based on the first and second sets of peaks, the combined set of peaks including peaks common to the first and second sets of peaks; and
    generating the fingerprint for the audio segment using the combined set of peaks.

2. The method of claim 1, wherein the method further comprises retrieving a stored audio segment from an index using the fingerprint, the stored audio segment matching the audio segment.

**3.** The method of claim 2, wherein the retrieving comprises generating a hash using the fingerprint and accessing the index using the hash to retrieve the stored audio segment.

**4.** The method of any one of claims 1 to 3, wherein the combined set of peaks excludes at least one peak from at least one of the first and the second set of peaks.

**5.** The method of any one of claims 1 to 4, wherein the method further comprises generating a group of peaks based on the combined set of peaks, and wherein the generating the fingerprint comprises extracting features from the group of peaks and generating the fingerprint using the extracted features.

**6.** The method of claim 5, wherein the extracted features comprise frequency-based features amongst peaks in the group of peaks.

**7.** The method of any one of claims 5 and 6, wherein the extracted features comprise time-based features amongst peaks in the group of peaks.

**8.** The method of any one of claims 1 to 7, wherein the method further comprises generating a third set of peaks by applying a third sliding window on the audio segment, the window instances of the second sliding window and the first sliding window being offset from window instances of the third sliding window, and wherein the generating the combined set of peaks is further based on the third set of peaks.

**9.** The method of any one of claims 1 to 8, wherein the generating the first set of peaks comprises generating a first time-frequency representation of the audio segment, and the generating the second set of peaks comprises generating a second time-frequency representation of the audio segment.

**10.** The method of claim 9, wherein the first time-frequency representation of the audio segment is a first spectrogram generating based on the audio segment, and wherein the second time-frequency representation of the audio segment is a second spectrogram generating based on the audio segment.

**11.** The method of any of claims 1 to 10, wherein the generating the first set of peaks comprises executing a first Constant-Q Transform (CQT) routine onto the audio segment, and wherein the generating the second set of peaks comprises executing a second CQT routine onto the audio segment.

**12.** The method of any of claims 1 to 10, wherein the generating the first set of peaks comprises executing a Constant-Q Transform (CQT) routine onto the audio segment, and wherein the generating the second set of peaks comprises executing a Discrete Fourier Transform (DFT) routine onto the audio segment.

**13.** The method of any of claims 1 to 12, wherein the peaks common to the first and second sets of peaks comprises peaks that are within a pre-determined threshold distance from each other.

**14.** A processor being configured to execute a method in accordance with at least one of claims 1 to 13.

**15.** A computer readable medium configured to store instructions, which when executed by a processor, causes the processor to execute a method in accordance with at least one of claims 1 to 13.

**FIG. 1**

**FIG. 2**

FIG. 3

FIG. 4

EP 4 708 080 A1

**FIG. 5**

FIG. 6

FIG. 7

800

FREQUENCY

TIME

*FIG. 8*

FIG. 9

EP 4 708 080 A1

1002

1022

1024

HASHING
FUNCTION
1000

1020

1012

1014

**FIG. 10**

**FIG. 11**

FIG. 12 (PRIOR ART)

$$Q = \{(h_1, \hat{x}_1), (h_1, \hat{x}_2), (h_2, \hat{x}_3), (h_3, \hat{x}_4), (h$$

assuming $\hat{x}_i = x_i + \delta$ (sequentially compatible)

$$\begin{cases} f(h_1, \hat{x}_1) = \{(d_1, -\delta), (d_2, x_2 - x_1 - \delta)\} \\ f(h_1, \hat{x}_2) = \{(d_1, x_1 - x_2), (d_2, -\delta)\} \\ f(h_2, \hat{x}_3) = \{(d_3, x_1 - x_3), (d_2, -\delta)\} \\ f(h_3, \hat{x}_4) = \{(d_1, -\delta), (d_2, -\delta)\} \\ f(h_3, \hat{x}_5) = \{(d_1, x_4 - x_5), (d_2, x_4 - x_5)\} \end{cases}$$

$$\begin{cases} \#(d_1, -\delta) = 2 \\ \#(d_2, x_2 - x_1 - \delta) = 1 \\ \#(d_1, x_1 - x_2) = 1 \\ \#(d_2, -\delta) = 3 \\ \#(d_3, x_1 - x_3) = 1 \\ \#(d_1, x_4 - x_5) = 1 \\ \#(d_2, x_4 - x_5) = 1 \end{cases}$$

with $\tau = 3$, result is $d_2$

# FIG. 13 (PRIOR ART)

1400

$I_{pos}$

pos 1        pos 2                pos K

1402

| hash $h_1$ | bit $b_{1,1}$ | bit $b_{1,2}$ | ... | bit $b_{1,K}$ |
| hash $h_2$ | bit $b_{2,1}$ | bit $b_{2,2}$ | ... | bit $b_{2,K}$ |

1404

| hash $h_n$ | bit $b_{n,1}$ | bit $b_{n,2}$ | ... | bit $b_{n,K}$ |

FIG. 14

$I_{ids}$

| hash $h_1$ | pos $x_1$ | → | ID $d_1$ |

| hash $h_1$ | pos $x_2$ | → | ID $d_2$ |

| hash $h_2$ | pos $x_1$ | → | ID $d_3$ |

1502

| hash $h_2$ | pos $x_3$ | → | ID $d_2$ |

1504

| hash $h_3$ | pos $x_4$ | → | ID $d_1$ | ID $d_2$ |

**FIG. 15**

EP 4 708 080 A1

FIG. 16

FIG. 17

EP 4 708 080 A1

$$Q = \{(h_1, \hat{x}_1), (h_1, \hat{x}_2), (h_2, \hat{x}_3), (h_3, \hat{x}_4), (h_3, \hat{x}_5)\}$$

assuming $\hat{x}_i = x_i + \delta$ (sequentially compatible)

$$\begin{cases} t_Q(-9) = 1 \\ t_Q(-4) = 1 \\ t_Q(-2) = 1 \\ t_Q(0) = 4 \\ t_Q(1) = 1 \\ t_Q(4) = 1 \\ t_Q(k) = 0 \text{ elsewhere} \end{cases}$$

with $\tau_{pos} = 3$, keep only main diagonal:

$$\begin{cases} g(h_1, x_1) = \{d_1\} \\ g(h_1, x_2) = \{d_2\} \\ g(h_2, x_3) = \{d_2\} \\ g(h_3, x_4) = \{d_1, d_2\} \end{cases}$$

$$\begin{cases} \#(d_1) = 2 \\ \#(d_2) = 3 \end{cases}$$

with $\tau_{ids} = 3$, result is $d_2$

**FIG. 18**

EP 4 708 080 A1

1900

1902

START

RECEIVING THE AUDIO SEGMENT

1904

GENERATING A FIRST SET OF PEAKS BY APPLYING A
FIRST SLIDING WINDOW ON THE AUDIO SEGMENT

1906

GENERATING A SECOND SET OF PEAKS BY APPLYING A
SECOND SLIDING WINDOW ON THE AUDIO SEGMENT

1908

GENERATING A COMBINED SET OF PEAKS BASED ON
THE FIRST AND SECOND SETS OF PEAKS

1910

GENERATING THE FINGERPRINT FOR THE AUDIO
SEGMENT USING THE COMBINED SET OF PEAKS

END

*FIG. 19*

START

2000

2002 RECEIVING A QUERY AUDIO SEGMENT

2004 GENERATING A SEQUENCE OF QUERY HASHES USING THE QUERY AUDIO SEGMENT

2006 ACCESSING A FIRST INVERTED INDEX USING THE SEQUENCE OF QUERY HASHES

2008 DETERMINING A TEMPORALLY COMPATIBLE SUB-SEQUENCE OF QUERY HASHES IN THE SEQUENCE USING DATA RETRIEVED FROM THE FIRST INVERTED INDEX

2010 ACCESSING A SECOND INVERTED INDEX USING ONLY THE TEMPORALLY COMPATIBLE SUB-SEQUENCE

2012 DETERMINING THE TARGET STORED AUDIO SEGMENT BASED ON DATA RETRIEVED FROM THE SECOND INVERTED INDEX

2014 TRANSMITTING THE DATA INDICATIVE OF THE TARGET STORED AUDIO SEGMENT AS A RETRIEVAL RESULT

FIG. 20

END

EP 4 708 080 A1

```
                        ┌─────────┐
                        │  START  │              2100
                        └─────────┘
2102
        ┌──────────────────────────────────────────────┐
        │        RECEIVING A QUERY DIGITAL ITEM         │
        └──────────────────────────────────────────────┘
2104
        ┌──────────────────────────────────────────────┐
        │        GENERATING A SEQUENCE OF QUERY         │
        │     ELEMENTS USING THE QUERY DIGITAL ITEM     │
        └──────────────────────────────────────────────┘
2106
        ┌──────────────────────────────────────────────┐
        │      ACCESSING A FIRST INVERTED INDEX USING THE │
        │          SEQUENCE OF QUERY ELEMENTS          │
        └──────────────────────────────────────────────┘
2108
        ┌──────────────────────────────────────────────┐
        │  DETERMINING A SEQUENTIALLY COMPATIBLE SUB-SEQUENCE │
        │    OF QUERY ELEMENTS IN THE SEQUENCE USING DATA │
        │     RETRIEVED FROM THE FIRST INVERTED INDEX  │
        └──────────────────────────────────────────────┘
2110
        ┌──────────────────────────────────────────────┐
        │  ACCESSING A SECOND INVERTED INDEX USING ONLY THE │
        │       SEQUENTIALLY COMPATIBLE SUB-SEQUENCE   │
        └──────────────────────────────────────────────┘
2112
        ┌──────────────────────────────────────────────┐
        │  DETERMINING THE TARGET STORED DIGITAL ITEM BASED ON │
        │   DATA RETRIEVED FROM THE SECOND INVERTED INDEX │
        └──────────────────────────────────────────────┘
2114
        ┌──────────────────────────────────────────────┐
        │  TRANSMITTING THE DATA INDICATIVE OF THE TARGET │
        │   STORED DIGITAL ITEM AS A RETRIEVAL RESULT  │
        └──────────────────────────────────────────────┘
                        ┌─────────┐
                        │   END   │
                        └─────────┘
```

**FIG. 21**

Europäisches
Patentamt

European
Patent Office

Office européen
des brevets

# EUROPEAN SEARCH REPORT

**Application Number**

EP 24 30 6456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 401 154 B2 (SHAZAM INVEST LTD [GB]) 26 July 2016 (2016-07-26) <br> * abstract * <br> * column 6, paragraph 2 - paragraph 3; figure 1 * <br> * column 8, last paragraph - column 11, paragraph 1; figures 3-6 * <br> * column 18, paragraph 5 - column 19, last paragraph; figure 8c * <br> ----- | 1-15 | INV. <br> G06F16/61 <br> G06F16/683 |
| X | SONNLEITNER REINHARD ET AL: "Robust Quad-Based Audio Fingerprinting", ARXIV:1806.04885V2,, <br> vol. 24, no. 3, 1 March 2016 (2016-03-01), pages 409-421, XP011599126, <br> DOI: 10.1109/TASLP.2015.2509248 <br> [retrieved on 2016-02-11] <br> * the whole document * <br> ----- | 1-15 | |
| A | WENDI CHEN ET AL: "Digital Fingerprinting on Multimedia: A Survey", ARXIV.ORG, CORNELL UNIVERSITY LIBRARY, 201 OLIN LIBRARY CORNELL UNIVERSITY ITHACA, NY 14853, <br> 26 August 2024 (2024-08-26), XP091860382, <br> * the whole document * <br> ----- | 1-15 | **TECHNICAL FIELDS SEARCHED (IPC)** <br><br> G06F |

The present search report has been drawn up for all claims

| Place of search | Date of completion of the search | Examiner |
|---|---|---|
| Berlin | 14 January 2025 | Barieux, Marc |

EPO FORM 1503 03.82 (P04C01)

## ANNEX TO THE EUROPEAN SEARCH REPORT
## ON EUROPEAN PATENT APPLICATION NO.

EP 24 30 6456

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| US 9401154 | B2 | 26-07-2016 | AT | E329319 T1 | 15-06-2006 |
| | | | AU | 8976601 A | 13-02-2002 |
| | | | BR | 0112901 A | 10-06-2003 |
| | | | CN | 1592906 A | 09-03-2005 |
| | | | DE | 60120417 T2 | 11-01-2007 |
| | | | DK | 1307833 T3 | 02-10-2006 |
| | | | EP | 1307833 A2 | 07-05-2003 |
| | | | ES | 2266254 T3 | 01-03-2007 |
| | | | HK | 1051248 A1 | 25-07-2003 |
| | | | JP | 4945877 B2 | 06-06-2012 |
| | | | JP | 2004505328 A | 19-02-2004 |
| | | | KR | 20030059085 A | 07-07-2003 |
| | | | PT | 1307833 E | 31-10-2006 |
| | | | US | 2002083060 A1 | 27-06-2002 |
| | | | US | 2006122839 A1 | 08-06-2006 |
| | | | US | 2008208891 A1 | 28-08-2008 |
| | | | US | 2011071838 A1 | 24-03-2011 |
| | | | US | 2012221131 A1 | 30-08-2012 |
| | | | US | 2013138442 A1 | 30-05-2013 |
| | | | US | 2014316787 A1 | 23-10-2014 |
| | | | US | 2016328473 A1 | 10-11-2016 |
| | | | US | 2018374491 A1 | 27-12-2018 |
| | | | WO | 0211123 A2 | 07-02-2002 |

EPO FORM P0459

For more details about this annex : see Official Journal of the European Patent Office, No. 12/82

**EP 4 708 080 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11182426 B